# NEUE EUROPÄISCHE PATENTSCHRIFT

(11) **EP 2 208 774 B2**
(45) Veröffentlichungstag und Bekanntmachung des Hinweises auf die Entscheidung über den Einspruch: **06.07.2016**
(45) Hinweis auf die Patenterteilung: 29.08.2012
(21) Anmeldenummer: 10004671.3
(22) Anmeldetag: 01.07.2005
(51) Int. Cl.: C09K 19/02, C09K 19/30, G02F 1/13, C09K 19/12, C09K 19/44

(54) **Flüssigkristallines Medium**
Liquid crystalline medium
Milieu cristallin liquide

(30) Priorität: 02.07.2004 DE 102004032326
(43) Veröffentlichungstag der Anmeldung: 21.07.2010
(62) Teilanmeldung aus: 05755652.4
(73) Patentinhaber: Merck Patent GmbH, 64293 Darmstadt (DE)
(72) Erfinder: Klasen-Memmer, Melanie, Dr., 67259 Heuchelheim (DE); Schoen, Sabine, Dr., 45701 Herten (DE)
(74) Vertreter: Stolmár & Partner Patentanwälte PartG mbB

(56) Entgegenhaltungen:
- EP-A1- 0 969 071
- EP-A1- 1 251 160
- EP-A1- 1 352 943
- WO-A1-02/051963
- DE-A1- 10 050 071
- DE-A1- 10 112 955
- DE-A1- 10 218 976
- JP-A- H10 287 875
- US-A- 5 599 480
- US-A1- 2001 010 366
- US-A1- 2002 014 613
- US-A1- 2002 084 443
- US-A1- 2003 006 399
- US-A1- 2003 017 279
- US-B1- 6 217 953
- US-B1- 6 642 981
- 'Physical Properties of Liquid Crytals' KONTAKTE Nr. 2, 1988, Seiten 7 - 14
- BARON M.: 'Definitions of basic terms relating to low-molar-mass' PURE APPL. CHEM. Bd. 73, Nr. 5, 2001, Seiten 845 - 895
- KÜLICKE W.-M.: 'Fliessverhalten von Stoffen und Stoffgemischen', 1986, HÜTHIG & WEPF vol. 'Kapittel 8', Seiten 318 - 368
- JUNGE M. THE MERCK GROUP LIQUID CRYSTAL NEWSLETTER Nr. 11, April 1995,
- KIRSCH UND BREMER: 'Nematische Flüssigkristalle für Aktiv-matrix-Displays:Design und Synthese' ANGEW. CHEM.2000 Bd. 112, Seiten 4384 - 4405
- SCHAD H.: 'The rotational viscosity of nematic liquid crystal mixtures at low temperatures' J. APPL. PHYS. Bd. 54, Nr. 9, 1983, Seiten 4994 - 4997
- SCHADT M.: 'Field-effect liquid-crystal displays and liquid-crystal materials:key technologies of the 1990s' DISPLAYS Bd. 13, Nr. 1, 1992, Seiten 11 - 34
- SCHADT M.: 'Liquid crystals in information technology' BER. BUNSENGES.PHYS.CHEM. Bd. 97, 1993, Seiten 1213 - 1236
- 2002 CHISSO KOREA SEMINAR, 2002 vol. F TAKESHITA: 'The introduction of the new"liquid crystal materials" and "alignment materials"'

## Beschreibung

Die vorliegende Erfindung betrifft ein flüssigkristallines Medium und dessen Anwendung in Flüssigkristallanzeigen, insbesondere mittels einer aktiven Matrix angesteuerte Flüssigkristallanzeigen (AMDs oder AMLCDs für Active Matrix addressed Liquid Crystal Displays). Besonders bevorzugt sind solche Anzeigen, die eine aktive Matrix aus Dünnfilmtransistoren (TFT = Thin Film Transistors) oder aus Varistoren verwenden. Derartige AMDs können verschiedene aktive elektronische Schaltelemente verwenden. Am weitesten verbreitet sind Anzeigen, die drei-polige Schaltelemente verwenden. Beispiele für derartige drei-polige Schaltelemente sind MOS (Metal Oxide Silicon)-Transistoren oder die bereits erwähnten TFTs oder Varistoren. Bei den TFTs werden verschiedene Halbleitermaterialien, überwiegend Silizium oder auch Cadmiumselenid, verwendet. Insbesondere wird polykristallines Silizium oder amorphes Silizium verwendet. Im Gegensatz zu den dreipoligen elektronischen Schaltelementen können in AMDs auch Matrizen aus zwei-poligen Schaltelementen, wie z.B. MIM (Metall Insulator Metal) Dioden, Ringdioden oder "Back to back"-Dioden eingesetzt werden.

In derartigen Flüssigkristallanzeigen werden die Flüssigkristalle als Dielektrika verwendet, deren optische Eigenschaften sich bei Anlegen einer elektrischen Spannung reversibel ändern. Elektrooptische Anzeigen, die Flüssigkristalle als Medien verwenden, sind dem Fachmann bekannt. Diese Flüssigkristallanzeigen verwenden verschiedene elektrooptische Effekte.

Die am weitesten verbreiteten konventionellen Anzeigen verwenden den TN-Effekt (Twisted nematic, mit einer um ca. 90° verdrillten nematischen Struktur), den STN-Effekt (Supertwisted nematic) oder den SBE-Effekt (Supertwisted birefringence effect). Bei diesen und ähnlichen elektro-optischen Effekten werden flüssigkristalline Medien mit positiver dielektrischer Anisotropie (Δε) verwendet.

Im Gegensatz zu den genannten konventionellen Anzeigen, die Flüssigkristallmedien mit positiver dielektrischer Anisotropie benötigen, gibt es andere elektrooptische Effekte, welche Flüssigkristallmedien mit negativer dielektrischer Anisotropie verwenden, wie z.B. den ECB-Effekt (Electrically Controlled Birefringence) und seine Unterformen DAP (Deformation of Aligned Phases), VAN (Vertically Aligned Nematics), MVA (Multi Domain Vertical Alignment), ASV (Advanced Super View), PVA (Patterned Vertical Alignment) und CSH (Color Super Homeotropics).

Das Prinzip der elektrisch kontrollierten Doppelbrechung, der ECB-Effekt (electrically controlled birefringence) oder auch DAP-Effekt (Deformation aufgerichteter Phasen) wurde erstmals 1971 beschrieben (M.F. Schieckel und K. Fahrenschon, "Deformation of nematic liquid crystals with vertical orientation in electrical fields", Appl. Phys. Lett. 19 (1971), 3912). Es folgten Arbeiten von J.F. Kahn (Appl. Phys. Lett. 20 (1972), 1193) und G. Labrunie und J. Robert (J. Appl. Phys. 44 (1973), 4869).

Die Arbeiten von J. Robert und F. Clerc (SID 80 Digest Techn. Papers (1980), 30), J. Duchene (Displays 7 (1986), 3) und H. Schad (SID 82 Digest Techn. Papers (1982), 244) haben gezeigt, dass flüssigkristalline Phasen hohe Werte für das Verhältnis der elastischen Konstanten K₃/K₁, hohe Werte für die optische Anisotropie Δn und Werte für die dielektrische Anisotropie Δε von -0,5 bis -5 aufweisen müssen, um für hochinformative Anzeigeelemente basierend auf dem ECB-Effekt eingesetzt werden zu können. Auf dem ECB-Effekt basierende elektrooptische Anzeigeelemente weisen eine homöotrope Randorientierung auf.

Der in letzter Zeit verstärkt eingesetzte IPS-Effekt (In Plane Switching) kann sowohl dielektrisch positive wie auch dielektrisch negative Flüssigkristallmedien verwenden, ähnlich wie auch "guest/host" also Gast/Wirt-Anzeigen, die Farbstoffe, je nach verwandtem Anzeigemodus, entweder in dielektrisch positiven oder in dielektrisch negativen Medien einsetzen können. Eine weitere vielversprechende Art von Flüssigkristallanzeigen sind sogenannte "Axially Symmetric Microdomain" (kurz ASM) -Anzeigen die bevorzugt mittels Plasmaarrays angesteuert werden (PA LCDs von "Plasma Addressed Liquid Crystal Displays").

Die in den oben genannten und alle ähnlichen Effekte ausnutzenden Flüssigkristallanzeigen eingesetzten Flüssigkristallmedien, enthalten in der Regel Flüssigkristallverbindungen mit der entsprechenden dielektrischen Anisotropie, also bei dielektrisch positiven Medien aus Verbindungen mit positiver dielektrischer Anisotropie und bei dielektrisch negativen Medien aus Verbindungen mit negativer dielektrischer Anisotropie.

Die Flüssigkristallmedien des Standes der Technik, wie z.B. in DE 102 18 979 A1, US 2002/014613 A1, DE 101 12 955 A1, US 5,599,480 A, US 2001/010366 A1, US 2002/084443 A1, US 2003/006399 A1, US 6,217,953 B1, offenbart, haben in der Regel relativ niedrige Doppelbrechungen, relativ hohe Betriebsspannungen (die Schwellenspannungen (V₀) sind oft relativ hoch, teilweise größer als 2,3 V) und relativ große Schaltzeiten, die insbesondere für videofähige Anzeigen nicht ausreichend sind. Des weiteren sind sie meist nicht für hohe Betriebstemperaturen geeignet und/oder haben unzureichende Tieftemperaturstabilitäten (LTS = Low Temperature Stability). So reichen die nematischen Phasen oft nur hinab bis -20 °C und teilweise sogar nur bis -10 °C.

Zum größten Teil weisen die Flüssigkristallmedien des Standes der Technik relativ ungünstige Werte für Δn auf, die oft deutlich kleiner als 0,11 und teilweise kleiner als 0,10 sind. Derartig kleine Δn-Werte sind jedoch z.B. für VAN-Anzeigen nicht besonders vorteilhaft, da sie die Verwendung von Zellen mit relativ großen Schichtdicken, von 4 µm oder mehr, erfordern und somit für viele Anwendungen zu nicht akzeptablen großen Schaltzeiten führen. So wird beispielsweise ein d·Δn von ungefähr 0,30 µm bei unverdrillter Direktororientierung eingesetzt.

Die Verwendung von Zellen mit sehr kleinen Schichtdicken führt jedoch häufig zu geringen Produktionsausbeuten bei den Anzeigen. Für schnell schaltende Anzeigen sind vorzugsweise Δn-Werte im Bereich von 0,075 bis 0,15 erwünscht. Dies gilt sowohl bei ECB- als auch bei IPS-Anzeigen.

Da die Schaltzeiten der Anzeigen des Standes der Technik, wie bereits oben erwähnt, oft zu groß sind, müssen die Viskositäten der Flüssigkristall-medien verbessert und damit verringert werden. Dies gilt besonders für die Rotationsviskosität γ₁ und ganz besonders für deren Wert bei niedrigen Temperaturen. Eine Verringerung der Fließviskosität ν₂₀ führt insbesondere bei Anzeigen mit homöotroper Randorientierung der Flüssigkristalle (z. B. bei ECB- und VAN-Anzeigen) in der Regel zu einer sehr erwünschten Verkürzung der Schaltzeiten.

Für die technische Anwendung dieses Effektes in elektrooptischen Anzeigeelementen werden FK-Phasen benötigt, die einer Vielzahl von Anforderungen genügen müssen. Besonders wichtig sind hier die chemische Beständigkeit gegenüber Feuchtigkeit, Luft und physikalischen Einflüssen wie Wärme, Strahlung im infraroten, sichtbaren und ultravioletten Bereich und elektrische Gleich- und Wechselfelder.

Ferner wird von technisch verwendbaren FK-Phasen eine flüssigkristalline Mesophase in einem geeigneten Temperaturbereich und niedrige Viskositäten gefordert.

In keiner der bisher bekannten Reihen von Verbindungen mit flüssigkristalliner Mesophase gibt es eine Einzelverbindung, die allen diesen Erfordernissen entspricht. Es werden daher in der Regel Mischungen von zwei bis 25, vorzugsweise drei bis 18, Verbindungen hergestellt, um als FK-Phasen verwendbare Substanzen zu erhalten. Optimale Phasen konnten jedoch auf diese Weise nicht leicht hergestellt werden, da bisher keine Flüssigkristallmaterialien mit deutlich negativer dielektrischer Anisotropie und ausreichender Langzeitstabilität zur Verfügung standen.

Die Anzeigen, die auf dem ECB-Effekt und ggf. dem IPS- oder PALCD-Effekt beruhen, erfordern bislang eine gezielte aufwendige Anpassung der einzusetzenden Flüssigkristallmischungen an den jeweiligen Mode bzw. die jeweilige Bauform, insbesondere was Δn- und Δε-Werte sowie die Rotations- und Fließviskositäten, betrifft.

Überraschenderweise wurde nun gefunden, dass flüssigkristalline Mischungen mit negativer Anisotropie, die ein bestimmtes Verhältnis von γ₁ und Δn bzw. dessen Quadrat aufweisen, die Nachteile der Medien aus dem Stand der Technik nicht, oder zumindest in deutlich vermindertem Umfang, aufweisen. Mit dem vorliegenden erfindungsgemäßen Mischungskonzept ist es möglich für die unterschiedlichen Modes auf leichte Weise negative Mischungen zu konzipieren, die universell für den ECB-Effekt eingesetzt werden können. Die erfindungsgemäßen Mischungen sind insbesondere geeignet für VAN-Anzeigen in den Bauformen MVA und PVA, ferner für IPS, FFS und PA LCD.

Gegenstand der vorliegenden Erfindung ist somit ein flüssigkristallines Medium auf der Basis eines Gemisches von polaren Verbindungen mit negativer dielektrischer Anisotropie (Δε), das sich dadurch auszeichnet, dass es bei einem Klärpunkt von > 60 °C und einem Δε von ≤ -2,3 einen Wert für das Verhältnis γ₁ / Δn² im Bereich von 6 - 45 Pa·s aufweist gemäß Anspruch 1.

Alle in dieser Anmeldung angegebenen Werte für das Verhältnis von γ₁ / Δn² besitzen die Einheit [Pa·s], sofern nicht anders angegeben.

Die erfindungsgemäßen Mischungen zeichnen sich durch ihre geringe Schaltzeiten in ECB-Anzeigen, eine breite nematische Phase und relativ hohe Werte für die Voltage Holding Ratio (HR) aus. Weiterhin zeigen die erfindungsgemäßen Mischungen mit einem derartigen γ₁ / Δn²-Verhältnis sehr günstige Werte für die kapazitive Schwelle und gleichzeitig eine sehr gute Tieftemperaturstabilität.

Gegenstand der Erfindung ist daher auch die Verwendung der flüssigkristallinen Mischungen, insbesondere für Anzeigen basierend auf dem ECB-, PALCD- und IPS-Effekt, sowie die entsprechenden Anzeigen enthaltend die erfindungsgemäßen Mischungen.

Nachfolgend sind bevorzugte Ausführungsformen des erfindungsgemäßen Mischungskonzeptes angegeben.

Die erfindungsgemäßen Mischungen weisen vorzugsweise ein γ₁ / Δn² von 6-30, vorzugsweise von 6-22 auf.

Die Werte für optische Anisotropie Δn liegen vorzugsweise im Bereich von 0,08 - 0,12. Insbesondere bevorzugt sind Mischungen mit einem Δn = 0,08 ± 0,01, ferner mit einem Δn = 0,10 ± 0,005 und Δn = 0,12 ± 0,01.

Die erfindungsgemäßen Mischungen weisen vorzugsweise Klärpünkte von ≥ 65 °C, insbesondere von ≥ 69 °C auf.

Die Schwellen V₀ (kapazitiv) liegen vorzugsweise im Bereich von 1,8- 2,3 V.

Die Temperaturstabilität (LTS) beträgt vorzugsweise mindestens 1000 h bei Temperaturen von ≤ -20 °C, insbesondere ≤ -30 °C und ganz besonders bevorzugt ≤ -40 °C.

Mischungen, die das geforderte Verhältnis von γ₁ / Δn²erfüllen, besitzen in Abhängigkeit von Δn, Δε und dem Klärpunkt vorzugsweise folgende Rotationsviskositäten, wie nachfolgend tabellarisch aufgeführt:

**1. Klärpunkt 70 °C ± 5 °C und Δε von -3,0 ± 0,6**

| **Δn** | **Rotationsviskositäten γ₁** |
|---|---|
| 0,08 ± 0,005 | ≤ 125 mPa·s, vorzugsweise ≤ 105 mPa·s |
| 0,09 ± 0,005 | ≤ 130 mPa·s, vorzugsweise ≤ 105 mPa·s |
| 0,10 ± 0,005 | ≤ 135 mPa·s, vorzugsweise ≤ 110 mPa·s |
| 0,11 ± 0,005 | ≤ 145 mPa·s, vorzugsweise ≤ 120 mPa·s |
| 0,12 ± 0,005 | ≤ 150 mPa·s, vorzugsweise ≤ 125 mPa·s |
| 0,13 ± 0,005 | ≤ 160 mPa·s, vorzugsweise ≤ 135 mPa·s |
| 0,15 ± 0,01 | ≤ 170 mPa·s, vorzugsweise ≤ 145 mPa·s |

Der Wert für das Verhältnis von γ₁ / Δn² liegt vorzugsweise im Bereich von 8,6 - 18,5. Die Schwellen sind vorzugsweise < 2,3 V, insbesondere im Bereich von 2,0 - 2,3 V

**2. Klärpunkt 70 °C ± 5 °C und Δε von -4,0 ± 0,4**

| **Δn** | **Rotationsviskositäten** γ₁ |
|---|---|
| 0,08 ± 0,005 | ≤ 140 mPa·s, vorzugsweise ≤ 120 mPa·s |
| 0,09 ± 0,005 | ≤ 165 mPa·s, vorzugsweise ≤ 145 mPa·s |
| 0,10 ± 0,005 | ≤ 185 mPa·s, vorzugsweise ≤ 150 mPa·s |
| 0,11 ± 0,005 | ≤ 190 mPa·s, vorzugsweise ≤ 160 mPa·s |
| 0,12 ± 0,005 | ≤ 195 mPa·s, vorzugsweise ≤ 175 mPa·s |
| 0,13 ± 0,005 | ≤ 205 mPa·s, vorzugsweise ≤ 180 mPa·s |
| 0,15 ± 0,01 | ≤ 220 mPa·s, vorzugsweise ≤ 185 mPa·s |

Der Wert für das Verhältnis von γ₁ / Δn² liegt vorzugsweise im Bereich von 9,5 - 20,0. Die Schwellen sind vorzugsweise < 2,1 V, insbesondere im Bereich von 1,8 - 2,1 V.

**3. Klärpunkt 70 °C ± 5 °C und Δε von -5,0 ± 0,6**

| **Δn** | **Rotationsviskositäten γ₁** |
|---|---|
| 0,08 ± 0,005 | ≤ 185 mPa·s, vorzugsweise ≤ 175 mPa·s |
| 0,09 ± 0,005 | ≤ 200 mPa·s, vorzugsweise ≤ 165 mPa·s |
| 0,10 ± 0,005 | ≤ 210 mPa·s, vorzugsweise ≤ 165 mPa·s |
| 0,11 ± 0,005 | ≤ 220 mPa·s, vorzugsweise ≤ 190 mPa·s |
| 0,12 ± 0,005 | ≤ 230 mPa·s, vorzugsweise ≤ 200 mPa·s |
| 0,13 ± 0,005 | ≤ 250 mPa·s, vorzugsweise ≤ 210 mPa·s |
| 0,15 ± 0,01 | ≤ 270 mPa·s, vorzugsweise ≤ 220 mPa·s |

Der Wert für das Verhältnis von γ₁ / Δn² liegt vorzugsweise im Bereich von 12,0 - 22,0. Bei Δn-Werten von 0,08 ± 0,005 kann der Wert auch im Bereich von 26-28 liegen. Die Schwellen sind vorzugsweise < 1,9 V, insbesondere im Bereich von 1,7- 1,8 V.

**4. Klärpunkt 90 °C ± 5 °C und Δε von -3,0 ± 0,6**

| **Δn** | **Rotationsviskositäten γ₁** |
|---|---|
| 0,08 ± 0,005 | ≤ 160 mPa·s, vorzugsweise ≤ 130 mPa·s |
| 0,09 ± 0,005 | ≤ 170 mPa·s, vorzugsweise ≤ 135 mPa·s |
| 0,10 ± 0,005 | ≤ 180 mPa·s, vorzugsweise ≤ 140 mPa·s |
| 0,11 ± 0,005 | ≤ 190 mPa·s, vorzugsweise ≤ 150 mPa·s |
| 0,12 ± 0,005 | ≤ 200 mPa·s, vorzugsweise ≤ 190 mPa·s |
| 0,13 ± 0,005 | ≤ 210 mPa·s, vorzugsweise ≤ 195 mPa·s |
| 0,15 ± 0,01 | ≤ 220 mPa·s, vorzugsweise ≤ 200 mPa·s |

Der Wert für das Verhältnis von γ₁ / Δn² liegt vorzugsweise im Bereich von 12,0 - 23,0. Die Schwellen sind vorzugsweise < 2,6 V, insbesondere im Bereich von 2,30 - 2,55 V.

**5. Klärpunkt 90 °C ± 5 °C und Δε von -4,0 ± 0,4**

| **Δn** | **Rotationsviskositäten γ₁** |
|---|---|
| 0,08 ± 0,005 | ≤ 185 mPa·s, vorzugsweise ≤ 150 mPa·s |
| 0,09 ± 0,005 | ≤ 195 mPa·s, vorzugsweise ≤ 160 mPa·s |
| 0,10 ± 0,005 | ≤ 215 mPa·s, vorzugsweise ≤ 200 mPa·s |
| 0,11 ± 0,005 | ≤ 215 mPa·s, vorzugsweise ≤ 190 mPa·s |
| 0,12 ± 0,005 | ≤ 215 mPa·s, vorzugsweise ≤ 200 mPa·s |
| 0,13 ± 0,005 | ≤ 235 mPa·s, vorzugsweise ≤ 210 mPa·s |
| 0,15 ± 0,01 | ≤ 250 mPa·s, vorzugsweise ≤ 210 mPa·s |

Der Wert für das Verhältnis von γ₁ / Δn² liegt vorzugsweise im Bereich von 14,5-22,0. Die Schwellen sind vorzugsweise < 2,25 V, insbesondere im Bereich von 2,00 - 2,25 V.

**6. Klärpunkt 90 °C ± 5 °C und Δε von -5,0 ± 0,6**

| **Δn** | **Rotationsviskositäten** γ₁ |
|---|---|
| 0,08 ± 0,005 | ≤ 280 mPa·s, vorzugsweise ≤ 265 mPa·s |
| 0,09 ± 0,005 | ≤ 275 mPa·s, vorzugsweise ≤ 260 mPa·s |
| 0,10 ± 0,005 | ≤ 275 mPa·s, vorzugsweise ≤ 260 mPa·s |
| 0,11 ± 0,005 | ≤ 275 mPa·s, vorzugsweise ≤ 265 mPa·s |
| 0,12 ± 0,005 | ≤ 280 mPa·s, vorzugsweise ≤ 265 mPa·s |

Der Wert für das Verhältnis von γ₁ / Δn² liegt vorzugsweise im Bereich von 18,0 - 25,0. Bei Δn-Werten von 0,08 ± 0,005 kann der Wert auch im Bereich von 40 - 45 liegen. Die Schwellen sind vorzugsweise < 2,0 V, insbesondere im Bereich von 1,8 - 2,0 V.

Erfindungsgemäße Mischungen mit Klärpunkten von 75 - 85 °C liegen mit ihren γ₁ / Δn²-Werten bzw. γ₁-Werten jeweils zwischen den oben angegebenen Grenzen für 70 ± 5 °C und 90 ± 5 °C.

Bevorzugte Ausführungsformen der erfindungsgemäßen Mischungen bezüglich ihrer Zusammensetzung werden im folgenden genannt:
a) Flüssigkristallines Medium, welches gemäß Anspruch 1 mindestens zwei Verbindungen der Formeln IA, IB und/oder II enthält, 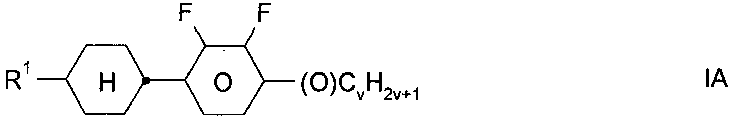 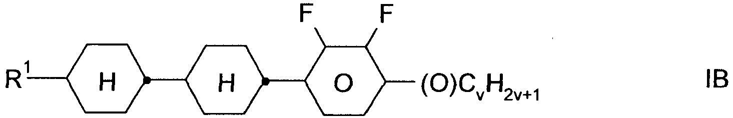 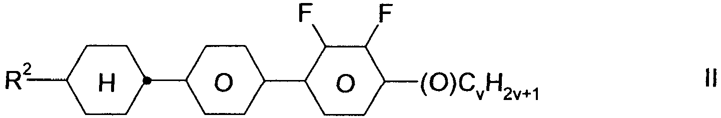 worin
   - R¹ und R²: jeweils unabhängig voneinander H, einen unsubstituierten, einen einfach durch CN oder CF₃ oder mindestens einfach durch Halogen substituierten Alkenylrest mit bis zu 15 C-Atomen, wobei in diesen Resten auch eine oder mehrere CH₂-Gruppen durch -O-, -S-, 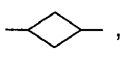 -C≡C-, -OCF₂-, -CF₂O- -OC-O- oder -O-CO- so ersetzt sein können, dass O-Atome nicht direkt miteinander verknüpft sind, und
   - v: 1 bis 6
   bedeuten.
   - R¹ und R²: bedeuten vorzugsweise geradkettiges Alkenyl.

   Bevorzugte Mischungen, insbesondere mit einem n-Wert von 0,08-0,09, enthalten insgesamt vier Verbindungen der Formeln 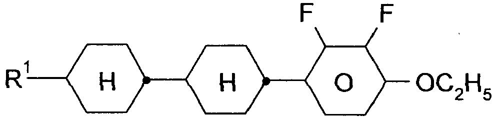 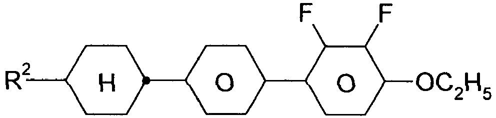
b) Flüssigkristallines Medium, welches zusätzlich eine oder mehrere Verbindungen der Formel III enthält, 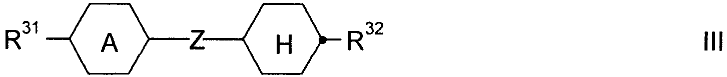 worin
   - R³¹ und R³²: jeweils unabhängig voneinander einen geradkettigen Alkyl-, Alkylalkoxy- oder Alkoxyrest mit bis zu 12 C-Atomen, und 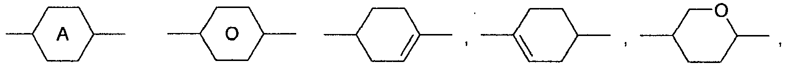 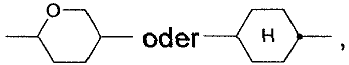
   und
   - Z: Einfachbindung, -C₂H₄-, -CH=CH-, -(CH₂)₄-, -(CH₂)₃O-, -O(CH₂)₃-, -CH=CHCH₂CH₂-, -CH₂CH₂CH=CH-, -CH₂O-, -OCH₂-, -CF₂O-, -OCF₂-, -COO-, -OCO-, -C₂F₄-, -CHFCF₂-, -CF=CF-, -CH=CF-, -CF=CH-, -CH₂-,
   bedeuten.
   Die erfindungsgemäßen Mischungen können bis zu 50 Gew.% an neutralen Verbindungen enthalten, vorzugsweise ausgewählt aus den Verbindungen der Formel III.
c) Flüssigkristallines Medium, welches vier, fünf, sechs oder mehr, vorzugsweise zwei oder drei Verbindungen der Formeln IA und/oder IB enthält.
d) Flüssigkristallines Medium, worin R¹ und R² in den Formeln IA und IB vorzugsweise folgende Bedeutungen hat: Vinyl, 1 E-Alkenyl oder 3-Alkenyl.
   R¹ undR² sind vorzugsweise CH₂=CH, CH₃-CH=CH, C₃H₇-CH=CH, CH₂=CH-C₂H₄ oder CH₃-CH=CH-C₂H₄.
   In den Verbindungen IA, IB und II bedeutet v vorzugsweise 2, 3 oder 4.
e) Flüssigkristallines Medium, wobei der Anteil an Verbindungen der Formeln IA und/oder IB im Gesamtgemisch mindestens 10 Gew.%, vorzugsweise mindestens 25 Gew.%, und ganz besonders bevorzugt ≥ 30 Gew.% beträgt.
f) Flüssigkristallines Medium, wobei der Anteil an Verbindungen der Formel II im Gesamtgemisch mindestens 10 Gew.% beträgt.
g) Flüssigkristallines Medium enthaltend mindestens zwei, vorzugsweise drei, Verbindungen der Formel II, insbesondere der Formel 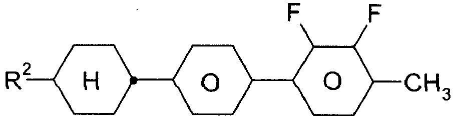
h) Flüssigkristallines Medium, wobei der Anteil den Verbindungen der Formel III im Gesamtgemisch mindestens 5 Gew.-% beträgt.
i) Flüssigkristallines Medium, welches zusätzlich eine Verbindung ausgewählt aus den Formeln IIIa bis IIIj enthält: 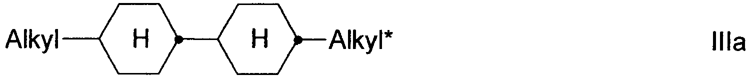 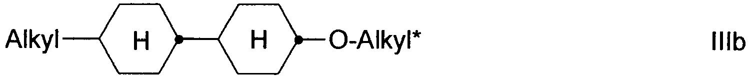 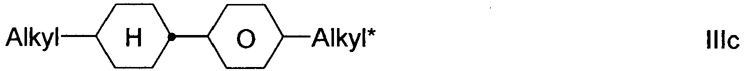 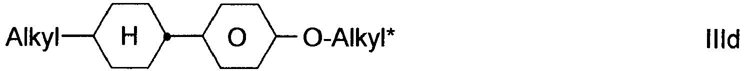 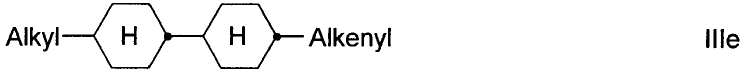 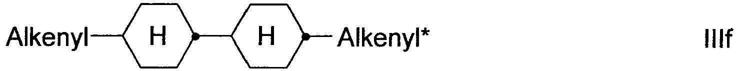 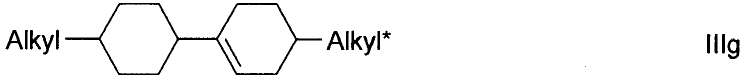 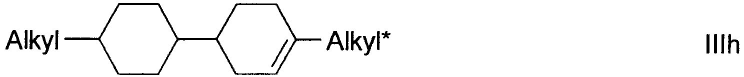 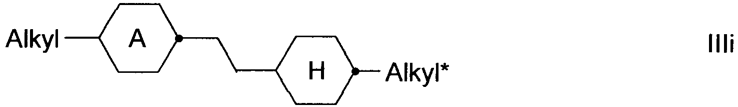 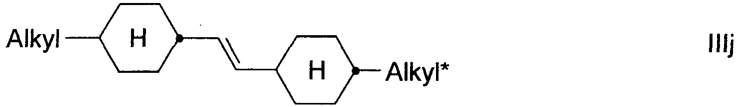 worin
   - Alkyl und Alkyl*: jeweils unabhängig voneinander einen geradkettigen Alkylrest mit 1-6 C-Atomen, und
   - Alkenyl und Alkenyl*: jeweils unabhängig voneinander einen geradkettigen Alkenylrest mit 2-6 C-Atomen, vorzugsweise Vinyl, 1-E-Alkenyl oder 3-E-Alkenyl
   bedeuten.
   Vorzugsweise enthält das erfindungsgemäße Medium mindestens eine Verbindung der Formel IIIa, Formel IIIb und/oder Formel IIIe, vorzugsweise in Mengen von > 5 Gew.-%, insbesondere > 10 Gew.-%, ganz besonders bevorzugt > 20 Gew.-%.
   Besonders bevorzugte Verbindungen der Formeln IIIe und IIIf werden nachfolgend genannt: 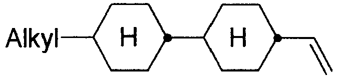 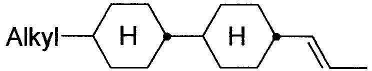 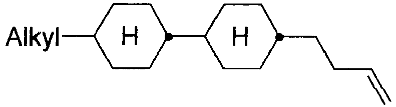 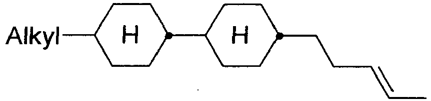 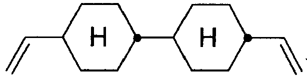 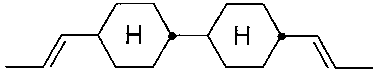 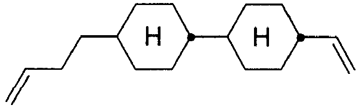 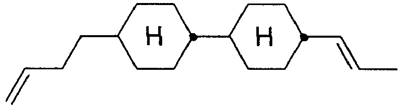 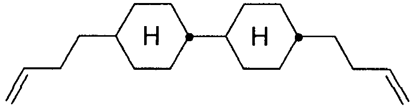
j) Flüssigkristallines Medium, das mindestens drei Verbindungen der Formel IIIe enthält, vorzugsweise ausgewählt aus der Gruppe der Verbindungen 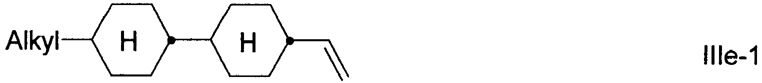 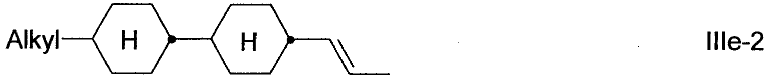 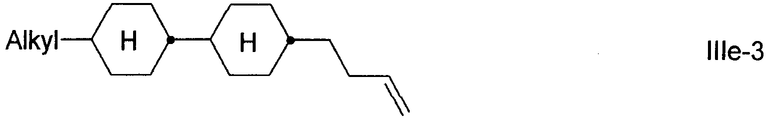
   Der Anteil der Verbindungen IIIe-1, IIIe-2 und/oder IIIe-3 in der Mischung, vorzugsweise mit einem Δn = 0,08 (± 0,005) beträgt vorzugsweise ≥ 20 Gew.-%, insbesondere ≥ 30 Gew.-%. Alkyl bedeutet vorzugsweise CₙH₂ₙ₊₁ mit n=3,4 oder 5.
   Weiterhin bevorzugt sind Medien, die die Verbindung der Formel 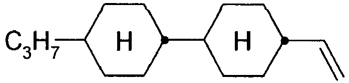 enthalten,
   vorzugsweise in Konzentrationen > 20 Gew.%, insbesondere > 30 Gew.-%, enthalten, vorzugsweise in Kombination mit der Verbindung der Formel 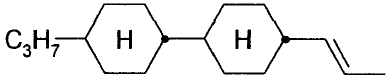 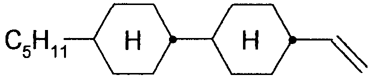 oder Letztere Verbindungen sind vorzugsweise in Mengen von 5-40 Gew.-% in der Mischung enthalten.
k) Flüssigkristallines Medium, welches im wesentlichen aus:
   10-40 Gew.-% einer oder mehreren Verbindungen der Formeln IA und IB, und
   10-40 Gew.-% einer oder mehreren Verbindungen der Formeln II besteht.
l) Flüssigkristallines Medium, welches zusätzlich eine oder mehrere Vierkernverbindungen der Formeln, 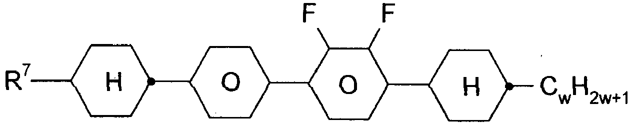 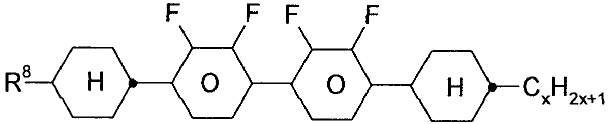 worin
   - R⁷ und R⁸: jeweils unabhängig voneinander eine der in Anspruch 1 für R¹ angegebenen Bedeutung haben, und
   - w und x: jeweils unabhängig voneinander 1 bis 6
   bedeuten,
   enthält.
m) Besonders bevorzugte Medien enthalten eine oder mehrere Indan-Verbindungen ausgewählt aus der Gruppe der Verbindungen der Formeln In-a bis In-d: 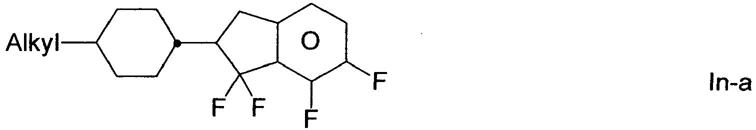 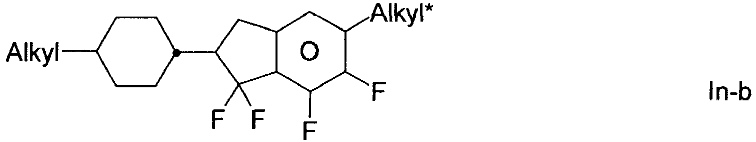 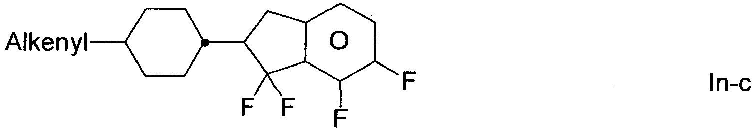 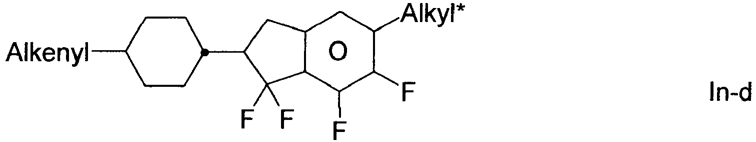 worin
   - Alkyl und Alkyl*: jeweils unabhängig voneinander einen geradkettigen Alkylrest mit 1-6 C-Atomen, und
   - Alkenyl: einen geradkettigen Alkenylrest mit 2-6 C-Atomen
   bedeuten.
   Vorzugsweise bedeutet Alkyl* CH₃, C₂H₅ oder n-C₃H₇.
   Vorzugsweise enthalten die erfindungsgemäßen Mischungen eine Verbindung der Formel In-a oder In-b, insbesondere eine Verbindung der Formel In-a. Der Anteil der Indan-Verbindungen im Gesamtgemisch beträgt mindestens 5 Gew.-%, vorzugsweise mindestens 10 Gew.-%.
n) Flüssigkristallines Medium, welches zusätzlich eine oder mehrere Verbindungen der Formeln 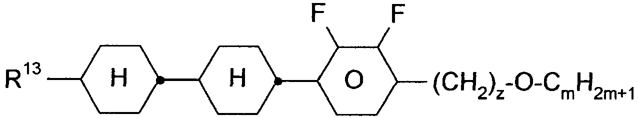 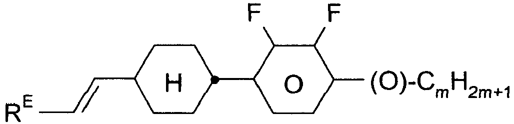 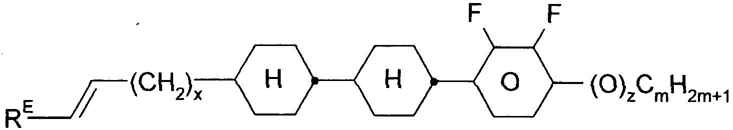 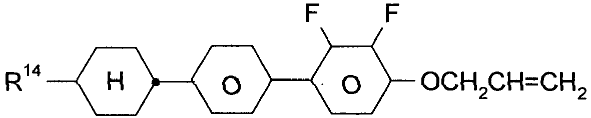 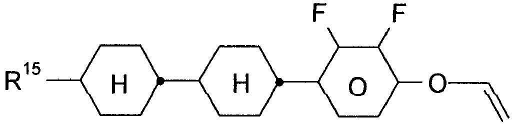 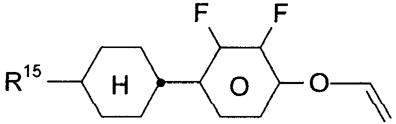 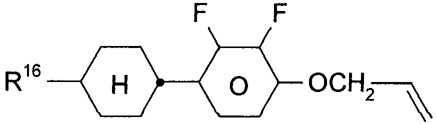 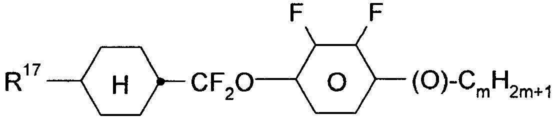 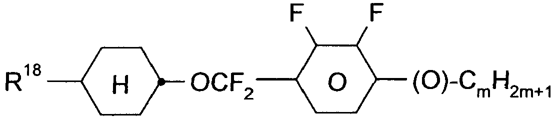 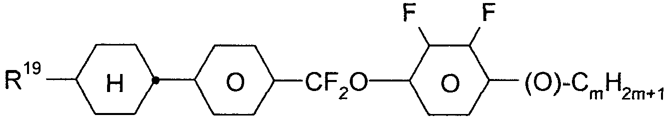 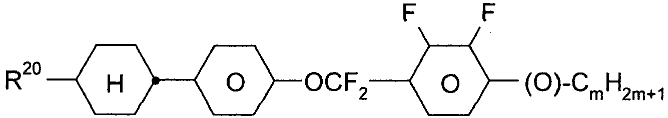 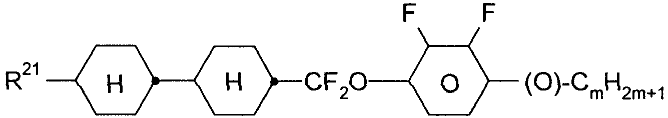 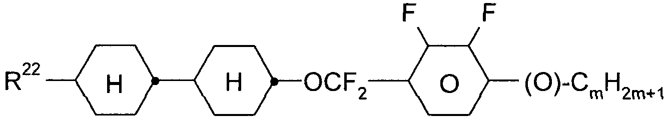 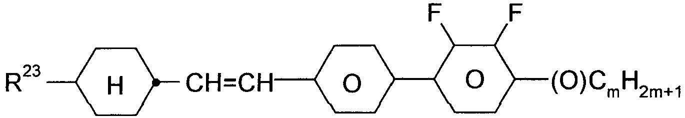 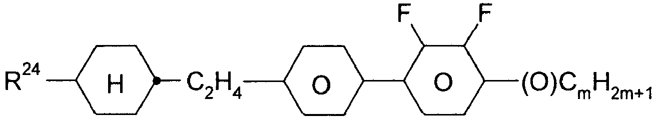 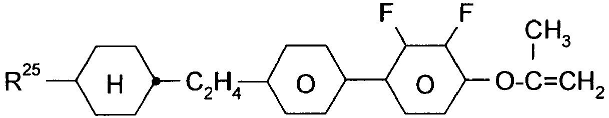 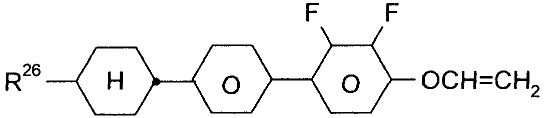 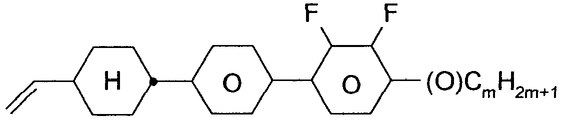 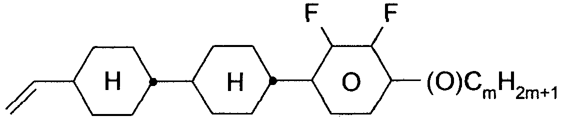 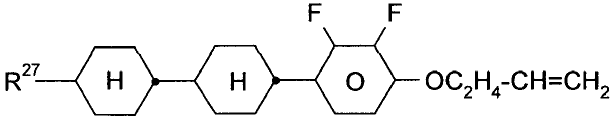 enthält,
   worin R¹³-R²⁷ jeweils unabhängig voneinander, die für R¹ angegebenen Bedeutungen haben, und z und m jeweils unabhängig voneinander 1-6 bedeuten. R^{E} bedeutet H, CH₃, C₂H₅ oder n-C₃H₇,
   x bedeutet 0,1,2 oder 3.
   Die genannten Verbindungen sind vorzugsweise jeweils in Mengen von mindestens 5 Gew.-% in der Gesamtmischung enthalten.
   Mischungen mit einem Δn im Bereich von 0,08 - 0,12 enthalten vorzugsweise Verbindungen der Formel 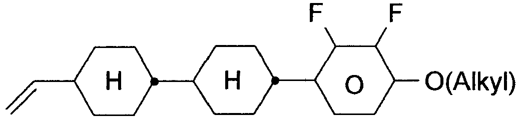 in Konzentrationen von ≥ 5 Gew.-%, vorzugsweise ≥ 10 Gew.-%.
   Derartige Mischungen enthalten weiterhin Verbindungen der Formel II in Mengen von ≥ 2 Gew.-%.
   Die Verbindungen der Formel 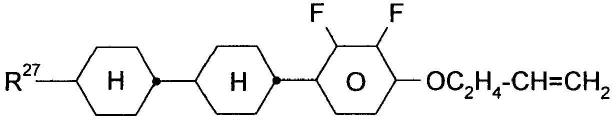 sind insbesondere für Mischungen mit einem Δn-Wert im Bereich von 0,07-0,10, insbesondere 0,07-0,09, geeignet. Vorzugsweise werden diese Verbindungen, worin R²⁷ vorzugsweise Alkyl bedeutet, in Konzentrationen von 5 - 20 Gew.-% eingesetzt.
o) Flüssigkristallines Medium enthaltend zusätzlich ein oder mehrere fluorierte Terphenyle der Formeln T-1 bis T-22, 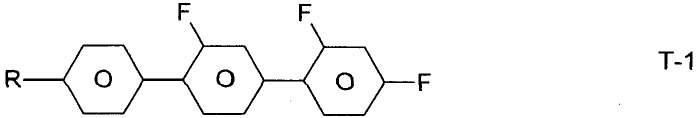 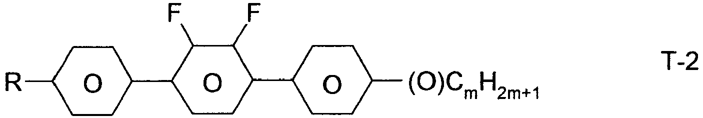 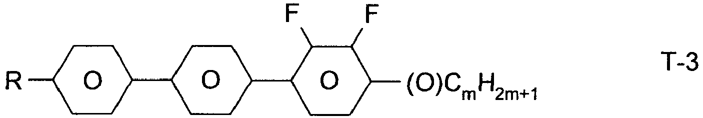 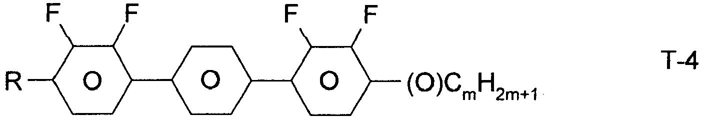 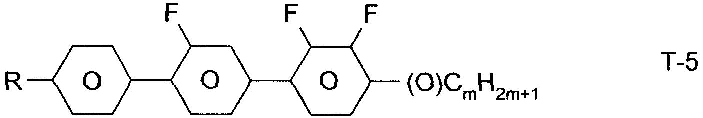 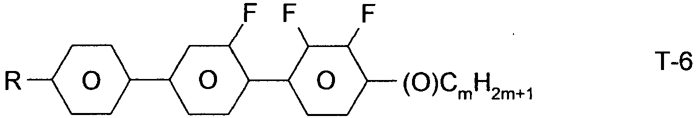 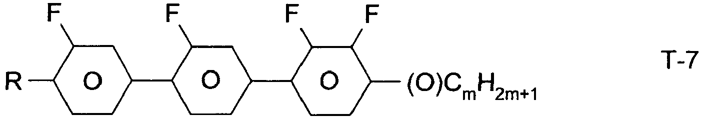 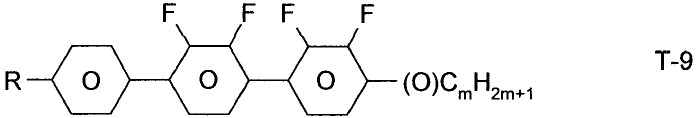 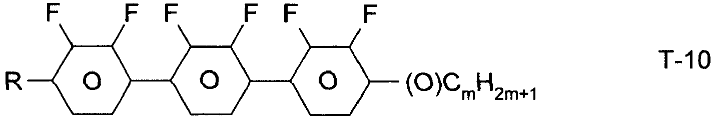 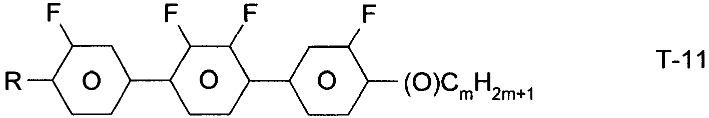 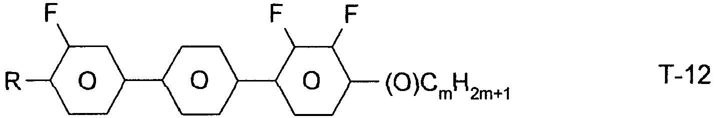 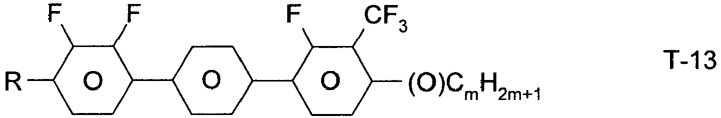 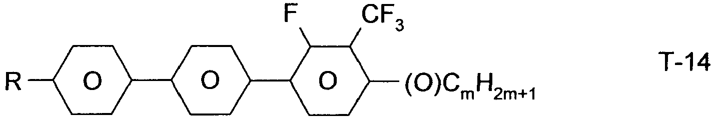 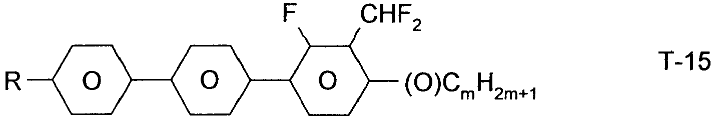 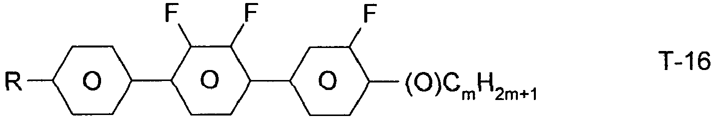 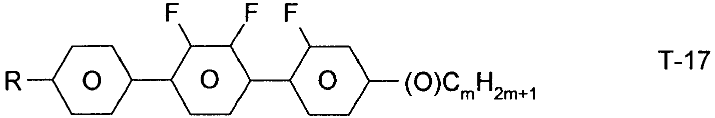 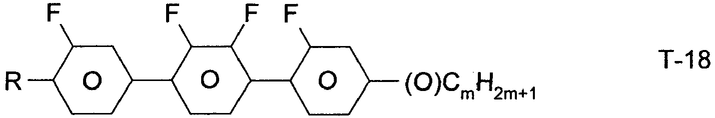 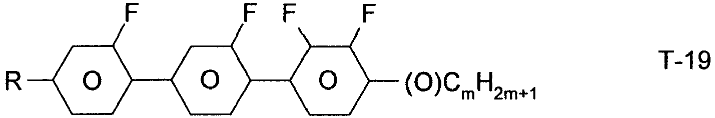 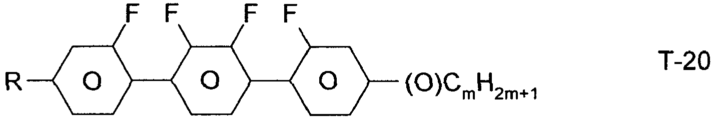 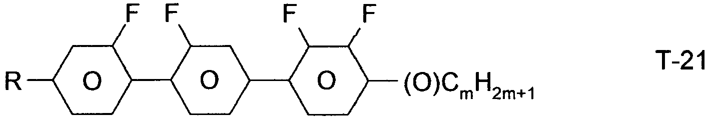 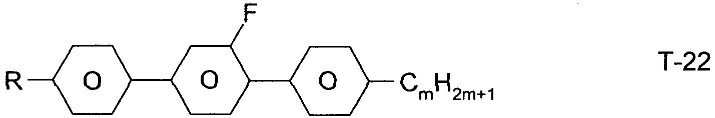 worin
   R die für R¹ angegebenen Bedeutungen hat.
   Vorzugsweise ist R geradkettiges Alkyl, Alkoxy oder Alkylalkoxy mit jeweils 1-6 C-Atomen, Alkenyl oder Alkenyloxy mit 2-6 C-atomen. Vorzugsweise bedeutet R Methyl, Ethyl, Propyl, Butyl, Pentyl, Hexyl Methoxy, Ethoxy, Propoxy, Butoxy, Pentoxy.
   Das erfindungsgemäße Medium enthält die Terphenyle der Formeln T-1 bis T-22 vorzugsweise in Mengen von 2-30 Gew.-%, insbesondere von 5-20 Gew.-%.
   Besonders bevorzugt sind Verbindungen der Formeln T-1, T-2, T-3 und T-22. In diesen Verbindungen bedeutet R vorzugsweise Alkyl, ferner Alkoxy jeweils mit 1-5 C-Atomen.
   Vorzugsweise werden die Terphenyle in Mischungen mit einem Δn ≥ 0,10 in Kombination mit den Verbindungen der Formeln IA, IB und II eingesetzt. Bevorzugte Mischungen enthalten 2-20 Gew.-% Terphenyle und 5-30 Gew.-% der Verbindungen der Formel II.
p) Flüssigkristallines Medium enthaltend zusätzlich ein oder mehrere Biphenyle der Formeln B-1 bis B-4, 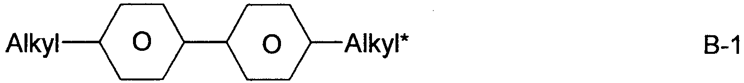 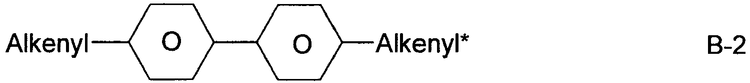 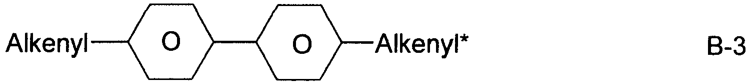 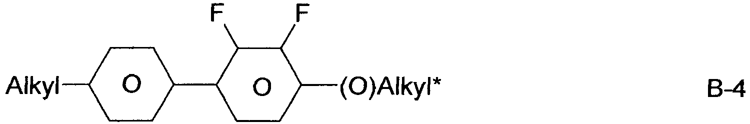 worin Alkyl, Alkyl*, Alkenyl und Alkenyl* die oben angegebenen Bedeutungen haben.
   Der Anteil der Biphenyle der Formeln B-1 bis B-4 der Gesamt-mischung beträgt vorzugsweise mindestens 3 Gew.-%, insbesondere ≥ 5 Gew.-%.
   Von den Verbindungen der Formeln B-1 bis B-4 sind die Verbindungen der Formeln B-1 und B-4 insbesondere bevorzugt.
   Bevorzugte Biphenyle sind ebenfalls 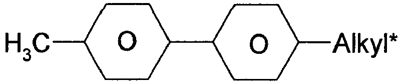 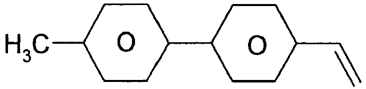 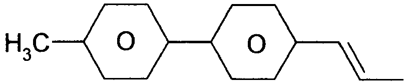 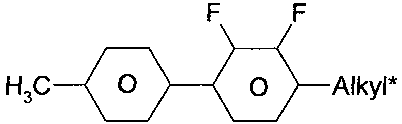
q) Flüssigkristallines Medium enthaltend zusätzlich ein oder mehrere Ester der Formeln E-1 bis E-3, 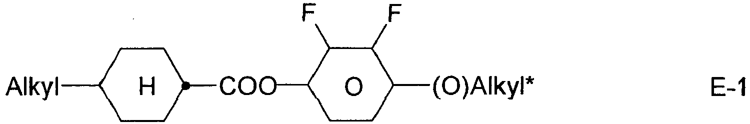 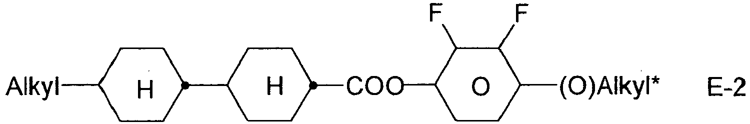 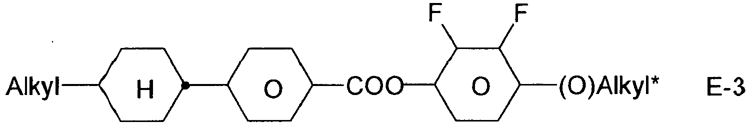 worin Alkyl und Alkyl* die oben angegebenen Bedeutungen haben.
   Der Anteil der Ester in der Gesamtmischung beträgt vorzugsweise mindestens 10 Gew.-%, insbesondere ≥ 30 Gew.-%.
   Von den Verbindungen E-1 bis E-3 ist die Verbindung E-1 insbesondere bevorzugt.
r) Flüssigkristallines Medium enthaltend zusätzlich ein oder mehrere Tolane der Formeln To-1 und To-2, 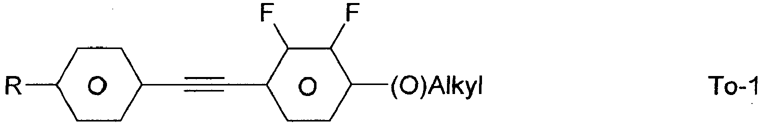 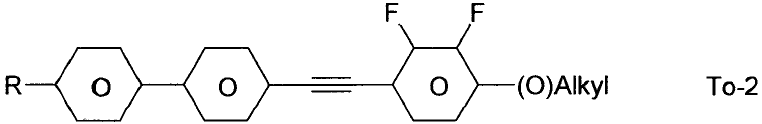 worin R und Alkyl, die oben angegebenen Bedeutungen haben.
   Der Anteil der Tolane To-1 und/oder To-2 in der Gesamtmischung beträgt vorzugsweise mindestens 5 Gew.-%, insbesondere ≥ 20 Gew.-%.
   In den Verbindungen To-1 und To-2 bedeutet R vorzugsweise geradkettiges Alkyl oder Alkoxy.
s) Flüssigkristallines Medium enthaltend zusätzlich ein oder mehrere Nitrile der Formeln N-1 und N-2, 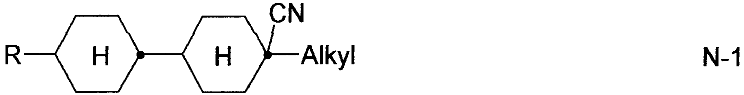 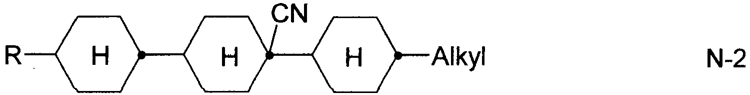 worin R und Alkyl die oben angegebenen Bedeutungen haben.
   Der Anteil der Nitrile in der Gesamtmischung beträgt vorzugsweise mindestens 5 Gew.-%, insbesondere ≥ 25 Gew.-%.
t) Flüssigkristallines Medium enthaltend mindestens 10 Gew.-%, vorzugsweise ≥ 15 Gew.-%, insbesondere ≥ 20 Gew.-% an Verbindungen der Formel B-4. Derartige Verbindungen werden vorzugsweise in Mischungen mit einem Δn ≥ 0,12 verwendet. Vorzugsweise werden die Biphenyle der Fomel B-4 in Kombination mit Verbindungen der Formeln II und/oder B-1 eingesetzt.
   Bevorzugte Mischungen mit einem Δn ≥ 0,12 enthalten neben den Verbindungen der Formel B-4 mindestens 15 Gew.-% an Verbindungen der Formel II und/oder ≥ 5 Gew.-% an Verbindungen der Formel B-1.
   Weiterhin bevorzugt werden Verbindungen der Formel B-4 in Kombination mit Terphenylen eingesetzt, vorzugsweise mit T-1, T-2 und/oder T-3.
u) Flüssigkristallines Medium enthaltend mindestens eine Verbindung der Formeln Z-1 bis Z-10 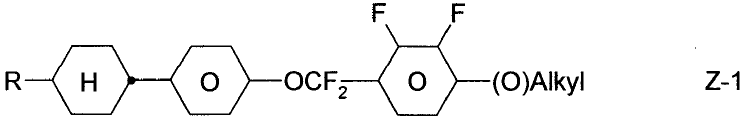 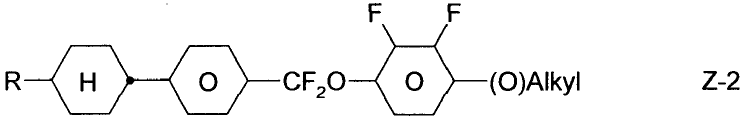 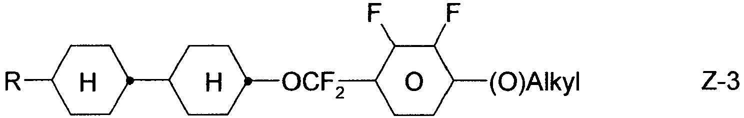 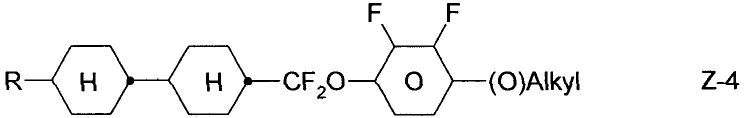 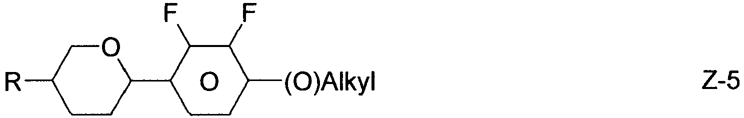 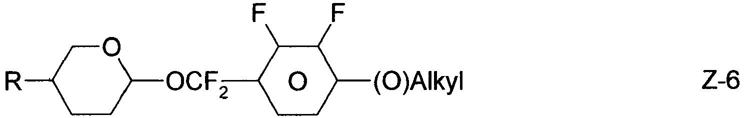 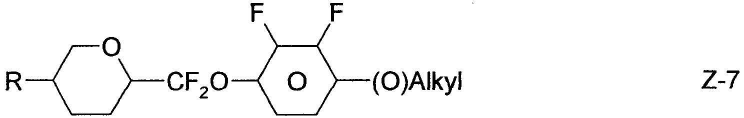 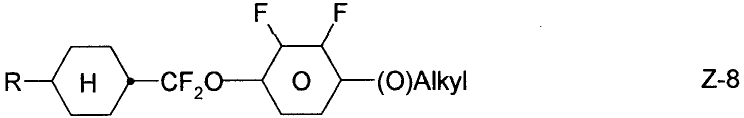 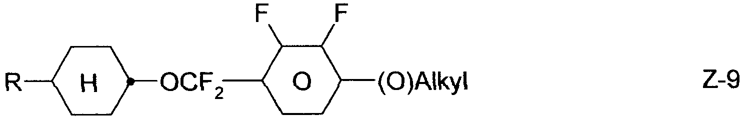 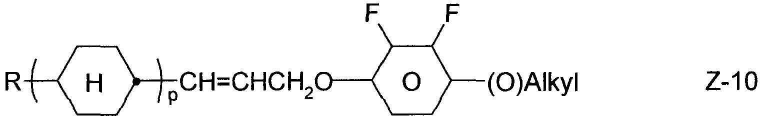 worin R und Alkyl die oben angegebenen Bedeutungen haben und p 1 oder 2 ist,
   vorzugsweise in Mengen von ≥ 5 Gew.-%, insbesondere ≥ 10 Gew.-%.
   Insbesondere bevorzugt sind Medien, die eine, zwei oder mehr Verbindungen der Formeln Z-1 bis Z-7 enthalten und zusätzlich eine, zwei oder mehr Verbindungen der Formel II. Vorzugsweise enthalten derartige Mischungen ≥ 10 Gew.-% an Verbindungen der Formel II und gegebenenfalls auch Verbindungen der Formel IA.
v) Flüssigkristallines Medium enthaltend mindestens eine Verbindung der Formel, 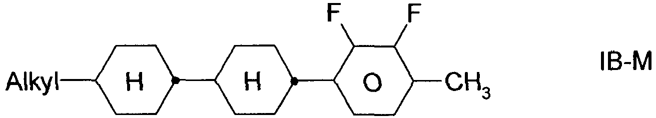 Bevorzugte Verbindungen der Formel IB-M sind die Verbindungen IB-M1 bis IB-M3: 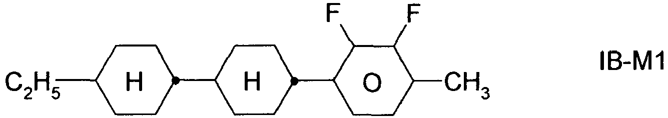 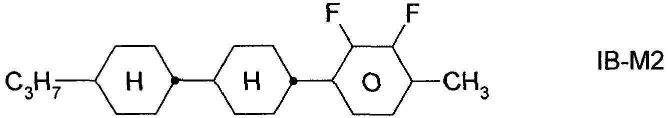 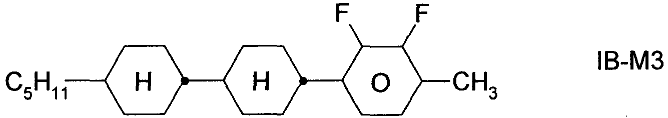
   Vorzugsweise enthalten die erfindungsgemäßen Mischungen mindestens eine Verbindung der Formel IB-M, insbesondere die Verbindung IB-M1, IB-M2 und/oder IB-M3, und mindestens eine Verbindung 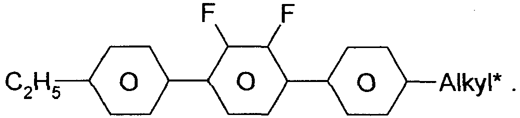
w) Flüssigkristallines Medium enthaltend mindestens eine Verbindung der Formel 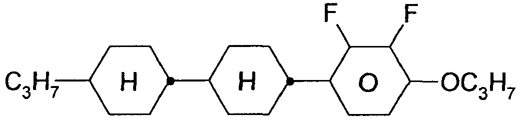 und/oder 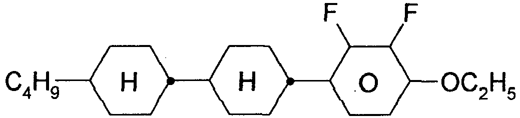
   vorzugsweise in Mengen von 5-20 Gew.-%, insbesondere in Kombination mit einer oder mehreren Verbindungen der Formeln T-1 bis T-21.
x) Flüssigkristallines Medium enthaltend mindestens eine Verbindung der Formel T-1 und mindestens eine Verbindung der Formel T-4.
y) Flüssigkristallines Medium enthaltend mindestens eine Verbindung der Formel 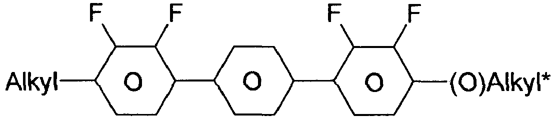 und mindestens eine Verbindung der Formel 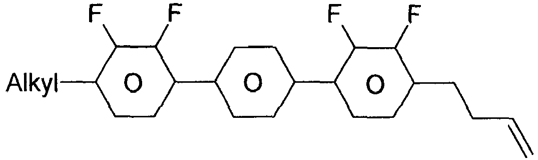
   Ein weiterer Gegenstand der Erfindung ist eine elektrooptische Anzeige mit einer Aktivmatrix-Adressierung basierend auf dem ECB-Effekt, dadurch gekennzeichnet, dass sie als Dielektrikum ein flüssigkristallines Medium nach einem der Ansprüche 1 bis 17 enthält.
   Vorzugsweise weist die Flüssigkristallmischung einen nematischen Phasenbereich von mindestens 60 K und eine Fließviskosität ν₂₀ von maximal 30 mm²·s⁻¹, vorzugsweise < 25 mm²·s⁻¹, bei 20 °C auf.
   Die erfindungsgemäße Flüssigkristallmischung weist ein Δε von etwa -2,3 bis -8,0, insbesondere von etwa -3,0 bis -6,0 auf, ganz besonders bevorzugt von ≤ -3,0 bis -5,0.
   Die Rotationsviskosität γ₁ ist vorzugsweise < 200 mPa·s, insbesondere < 190 mPa·s.
z) Flüssigkristallines Medium enthaltend mindestens eine Verbindung der Formeln O-1 bis O-11, 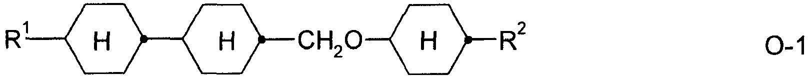 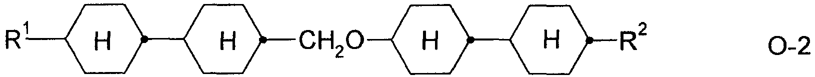 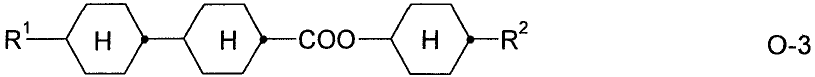 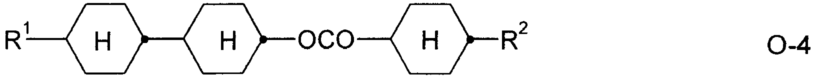 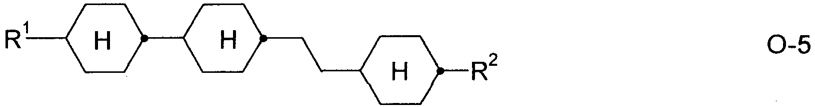 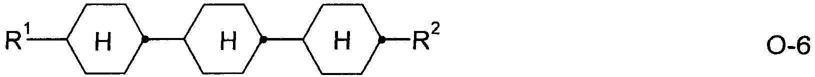 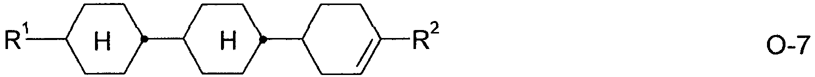 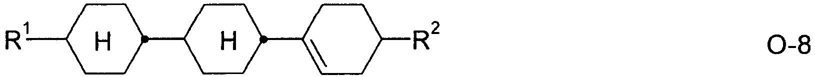 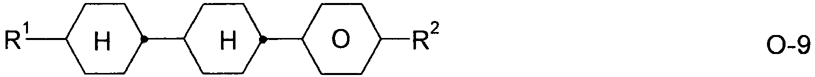 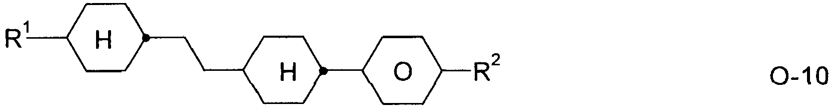 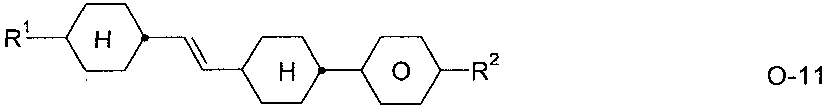 worin R¹ und R² jeweils unabhängig voneinander geradkettiges Alkyl, bedeuten.

Bevorzugte erfindungsgemäße flüssigkristalline Medien enthalten eine oder mehrere Substanzen mit einem Δε < 2,3, die eine Tetrahydronaphthyl- oder Naphthyl-Einheit aufweisen, wie z.B. die Verbindungen der Formeln N-1 bis N-5 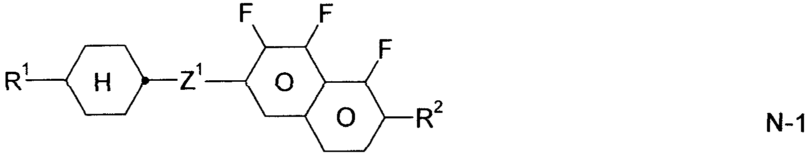 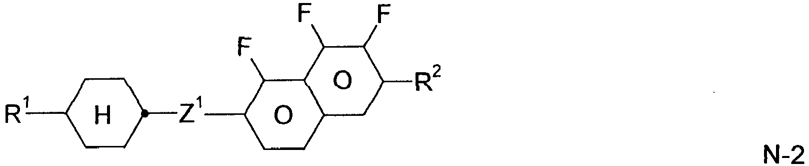 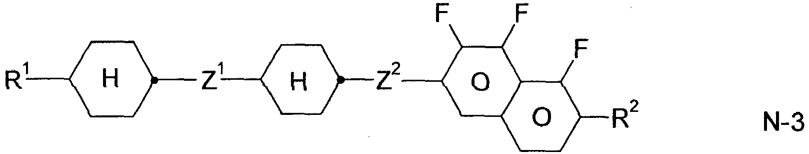 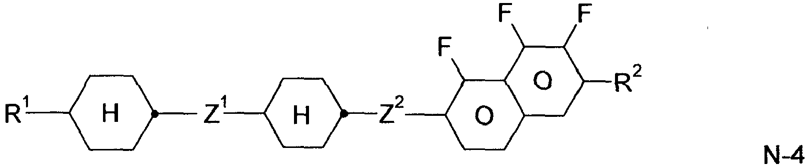 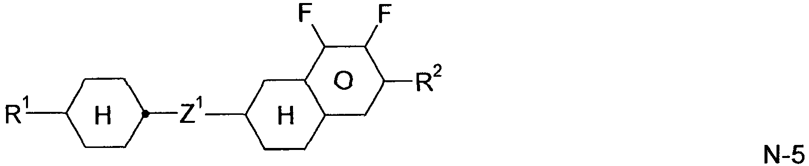 worin R¹ und R² jeweils unabhängig voneinander die oben angegebenen Bedeutungen haben, vorzugsweise geradkettiges Alkyl, geradkettiges Alkoxy oder geradkettiges Alkenyl bedeuten, und Z, Z¹ und Z² jeweils unabhängig voneinander
-C₂H₄-, -CH=CH-, -(CH₂)₄-, -(CH₂)₃O-, -O(CH₂)₃-, -CH=CHCH₂CH₂-, -CH₂CH₂CH=CH-, -CH₂O-, -OCH₂-, -COO-, -OCO-, -C₂F₄-, -CF=CF-, -CF=CH-, -CH=CF-, -CH₂- oder eine Einfachbindung
bedeuten.

Die Doppelbrechung Δn in der Flüssigkristallmischung liegt, in der Regel, zwischen 0,07 und 0,16, vorzugsweise zwischen 0,08 und 0,12.

Die erfindungsgemäßen Mischungen sind für alle VA-TFT-Anwendungen geeignet, wie z.B. VAN, MVA, (S)-PVA, ASV. Weiterhin sind sie für IPS (In plane switching)- und FFS (Fringe field switching)-LCD-Anwendungen mit negativem Δε geeignet.

Die einzelnen Komponenten der Formeln IA, IB, II und III der erfindungsgemäßen Flüssigkristallphasen sind entweder bekannt oder ihre Herstellungsweisen sind für den einschlägigen Fachmann aus dem Stand der Technik ohne weiteres abzuleiten, da sie auf in der Literatur beschriebenen Standardverfahren basieren.

Die nematischen Flüssigkristallmischungen in den erfindungsgemäßen Anzeigen enthalten in der Regel zwei Komponenten A und B, die ihrerseits aus einer oder mehreren Einzelverbindungen bestehen.

Die Komponente A weist eine deutlich negative dielektrische Anisotropie auf und verleiht der nematischen Phase eine dielektrische Anisotropie von ≤ -2,3. Sie enthält bevorzugt Verbindungen der Formeln IA und/oder IB und II.

Der Anteil der Komponente A liegt vorzugsweise zwischen 45 und 100 %, insbesondere zwischen 60 und 100 %.

Für Komponente A wird vorzugsweise eine (oder mehrere) Einzelverbindung(en) gewählt, die einen Wert von Δε ≤ -0,8 haben. Dieser Wert muss umso negativer sein, je kleiner der Anteil A an der Gesamtmischung ist.

Die Komponente B weist eine ausgeprägte Nematogenität und eine Fließviskosität von nicht mehr als 30 mm²·s⁻¹, vorzugsweise nicht mehr als 25 mm^{2·}s⁻¹, bei 20 °C auf.

Besonders bevorzugte Einzelverbindungen der Komponente B sind extrem niedrig viskose nematische Flüssigkristalle mit einer Fließviskosität von nicht mehr als 18, vorzugsweise nicht mehr als 12 mm² s⁻¹, bei 20 °C. Komponente B ist monotrop oder enantiotrop nematisch, weist keine smektischen Phasen auf und kann in Flüssigkristallmischungen das Auftreten von smektischen Phasen bis zu sehr tiefen Temperaturen verhindern. Versetzt man beispielsweise eine smektische Flüssigkristallmischung mit jeweils verschiedenen Materialien mit hoher Nematogenität, so kann durch den erzielten Grad der Unterdrückung smektischer Phasen die Nematogenität dieser Materialien verglichen werden. Dem Fachmann sind aus der Literatur eine Vielzahl geeigneter Materialien bekannt. Besonders bevorzugt sind Verbindungen der Formel III, ferner Verbindungen der Formeln B-1 bis B-4, O-1 und O-2.

Daneben können diese Flüssigkristallphasen auch mehr als 18 Komponenten, vorzugsweise 18 bis 25 Komponenten, enthalten.
Vorzugsweise enthalten die Phasen 4 bis 15, insbesondere 5 bis 12, Verbindungen der Formeln IA und/oder IB, II und optional III.

Neben Verbindungen der Formeln IA und/oder IB, II und III können auch noch andere Bestandteile zugegen sein, z. B. in einer Menge von bis zu 45 % der Gesamtmischung, vorzugsweise jedoch bis zu 35 %, insbesondere bis zu 10 %.

Die anderen Bestandteile werden vorzugsweise ausgewählt aus den nematischen oder nematogenen Substanzen, insbesondere den bekannten Substanzen, aus den Klassen der Azoxybenzole, Benzylidenaniline, Biphenyle, Terphenyle, Phenyl oder Cyclohexylbenzoate, Cyclohexan-carbonsäurephenyl- oder -cyclohexylester, Phenylcyclohexane, Cyclohexylbiphenyle, Cyclohexylcyclohexane, Cyclohexylnaphthaline, 1,4-Bis-cyclo-hexylbiphenyle oder Cylohexylpyrimidine, Phenyl- oder Cyctohexytdioxane, gegebenenfalls halogenierten Stilbene, Benzylphenylether, Tolane und substituierten Zimtsäuren.

Die wichtigsten als Bestandteile derartiger Flüssigkristallphasen in Frage kommenden Verbindungen lassen sich durch die Formel IV charakterisieren,

R⁹-L-G-E-R¹⁰ IV

worin L und E je ein carbo- oder heterocyclisches Ringsystem aus der aus 1,4-disubstituierten Benzol- und Cyclohexanringen, 4,4'-disubstituierten Biphenyl-, Phenylcyclohexan- und Cyclohexylcyclohexansystemen, 2,5-disubstituierten Pyrimidin- und 1,3-Dioxanringen, 2,6-disubstituierten Naphthalin, Di- und Tetrahydronaphthalin, Chinazolin und Tetrahydrochinazolin gebildeten Gruppe,

| | | |
|---|---|---|
| G | -CH=CH- | -N(O)=N- |
| | -CH-CQ- | -CH=N(O)- |
| | -C≡C- | -CH₂-CH₂- |
| | -CO-O- | -CH₂-O- |
| | -CO-S- | -CH₂-S- |
| | -CH=N- | -COO-Phe-COO- |
| | -CF₂O- | -CF=CF- |
| | -OCF₂ | -OCH₂- |
| | -(CH₂)₄- | -(CH₂)₃O- |

oder eine C-C-Einfachbindung, Q Halogen, vorzugsweise Chlor, oder -CN, und R⁹ und R¹⁰ jeweils Alkyl, Alkenyl, Alkoxy, Alkanoyloxy oder Alkoxycarbonyloxy mit bis zu 18, vorzugsweise bis zu 8 Kohlenstoffatomen, oder einer dieser Reste auch CN, NC, NO₂, NCS, SCN, CF₃, OCF₃, F, Cl oder Br bedeuten.

Bei den meisten dieser Verbindungen sind R⁹ und R¹⁰ voneinander verschieden, wobei einer dieser Reste meist eine Alkyl- oder Alkoxygruppe ist. Auch andere Varianten der vorgesehenen Substituenten sind gebräuchlich. Viele solcher Substanzen oder auch Gemische davon sind im Handel erhältlich. Alle diese Substanzen sind nach literaturbekannten Methoden herstellbar.

Es versteht sich für den Fachmann von selbst, dass die erfindungsgemäße VA-, IPS-, FFS- oder PA LCD-Mischung auch Verbindungen enthalten kann, worin beispielsweise H, N, O, Cl, F durch die entsprechenden Isotope ersetzt sind.

Der Aufbau der erfindungsgemäßen Flüssigkristallanzeigen entspricht der üblichen Geometrie, wie sie z.B. in EP-OS 0 240 379, beschrieben wird.

Vorzugsweise enthalten die erfindungsgemäßen Mischungen neben den Verbindungen der Formeln IA, IB, II und III eine oder mehrere Verbindungen der nachfolgend genannten Verbindungen.

Folgende Abkürzungen werden verwendet:
(n, m = 1-6; z = 1-6)

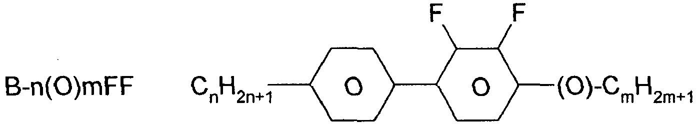

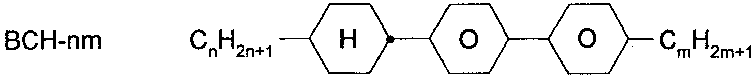

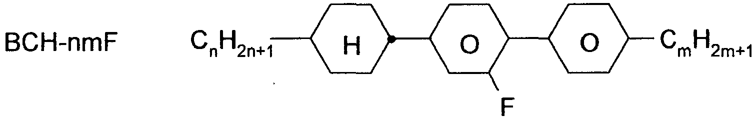

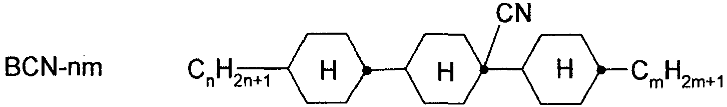

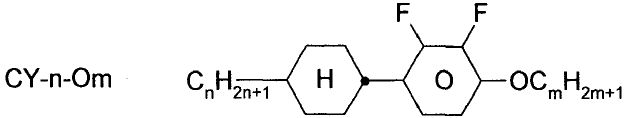

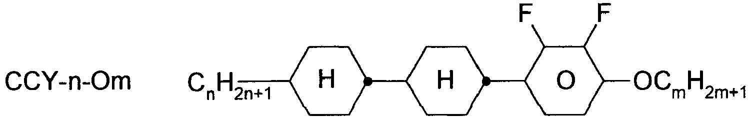

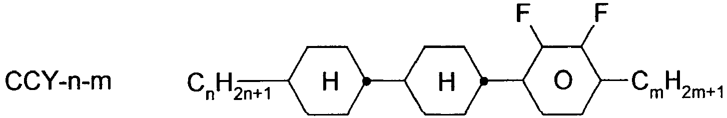

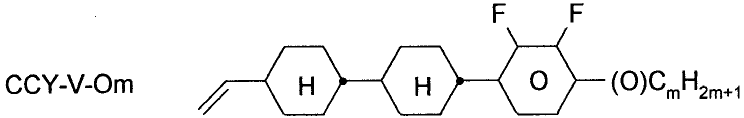

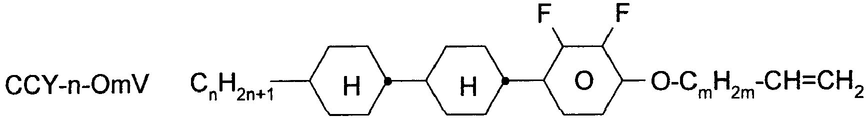

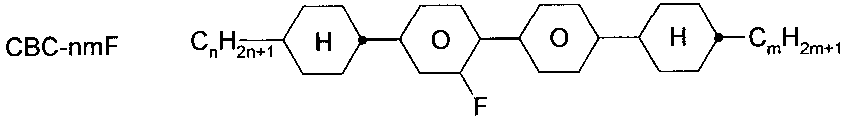

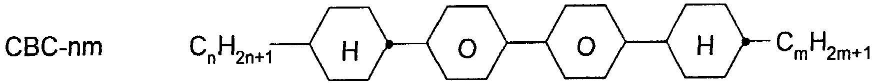

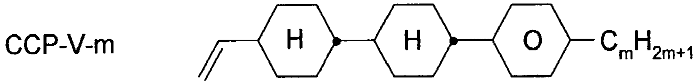

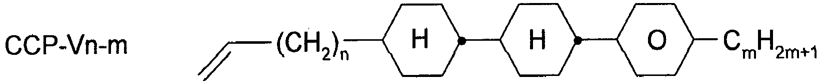

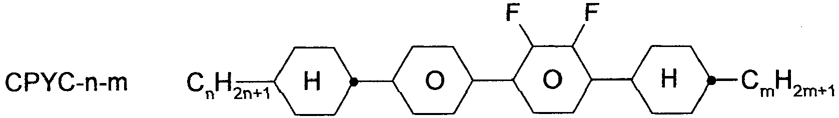

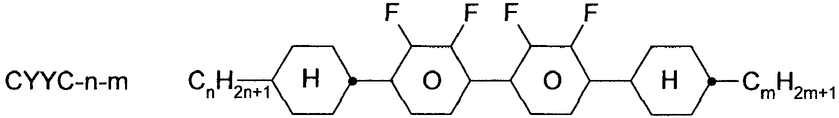

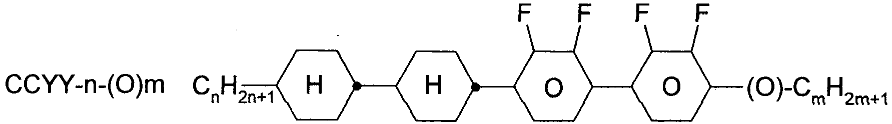

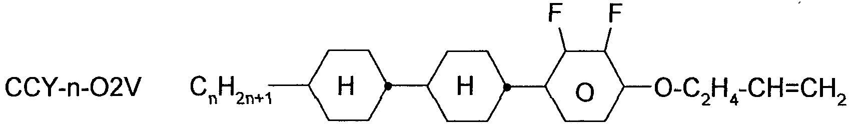

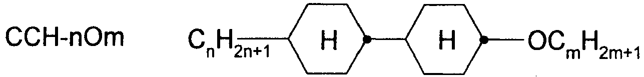

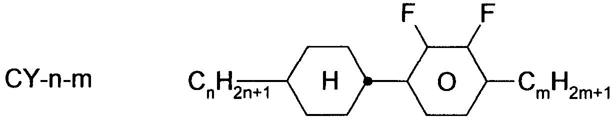

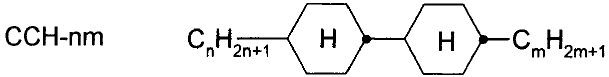

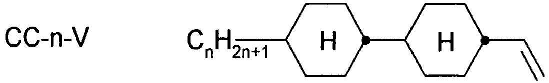

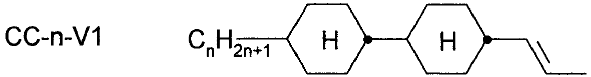

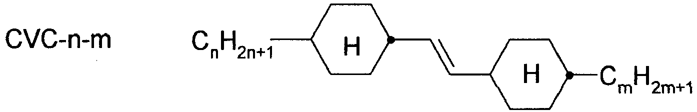

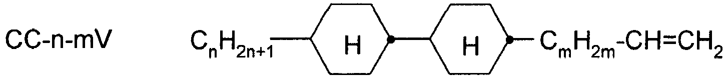

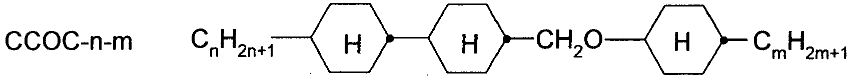

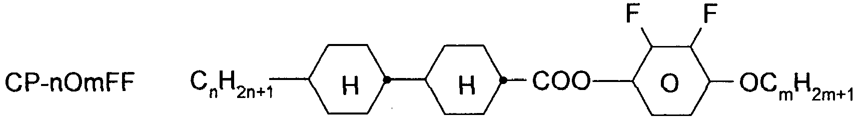

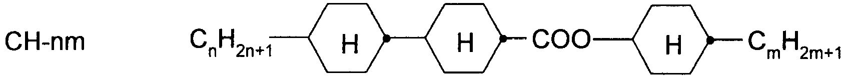

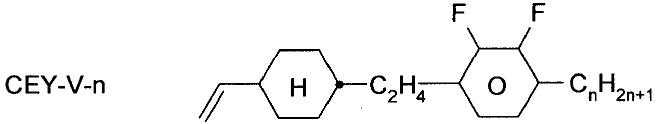

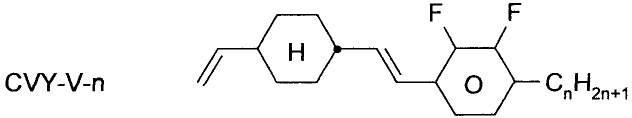

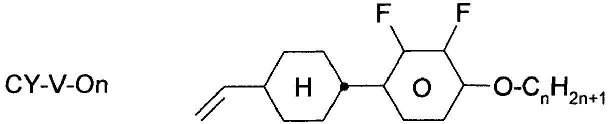

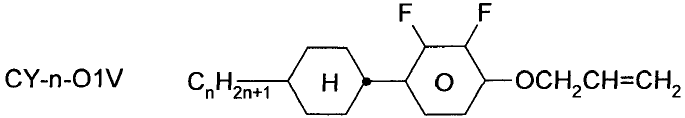

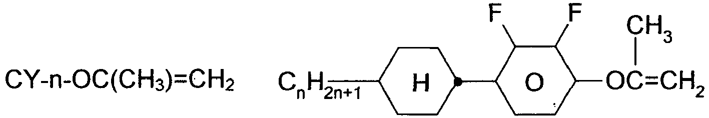

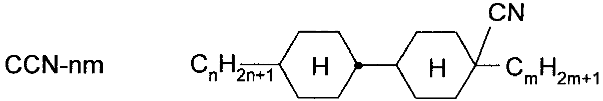

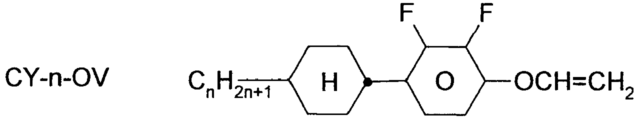

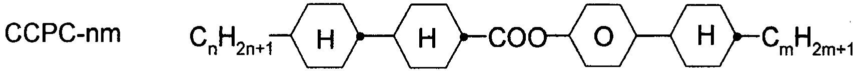

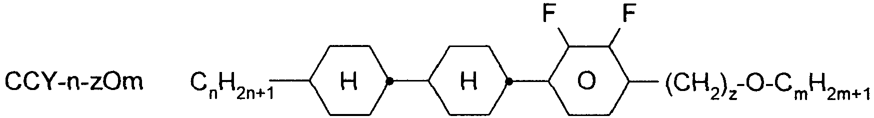

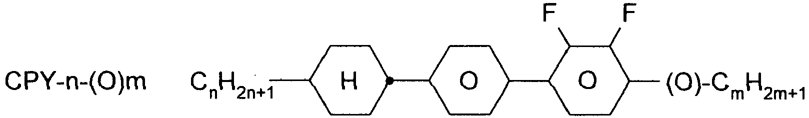

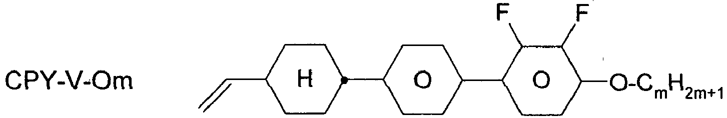

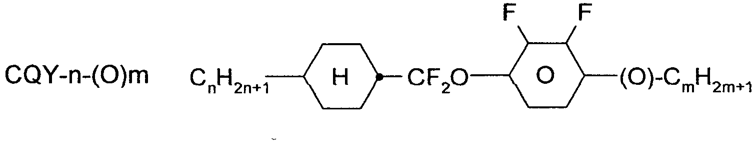

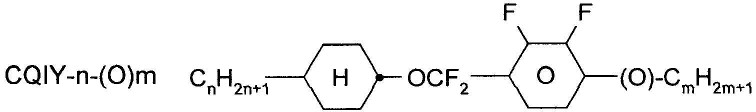

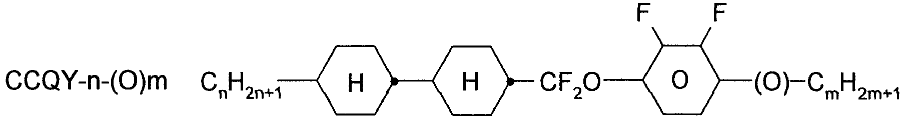

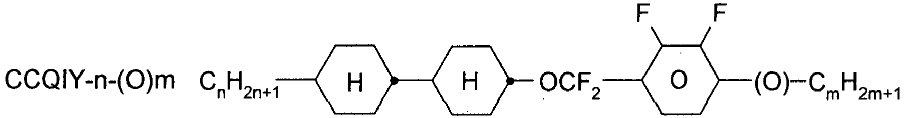

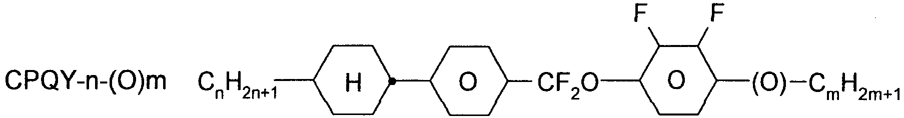

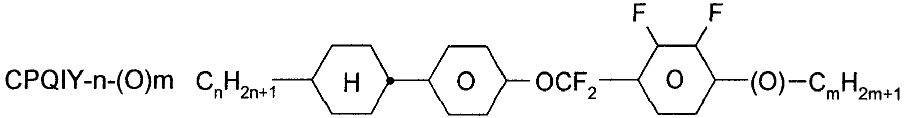

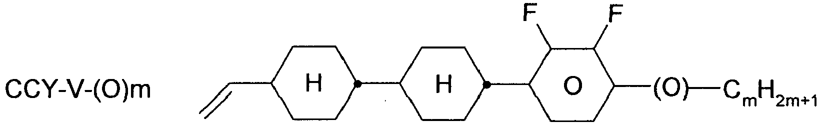

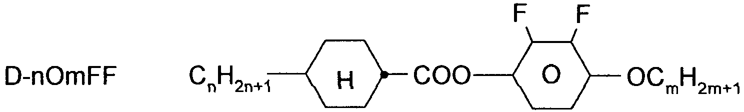

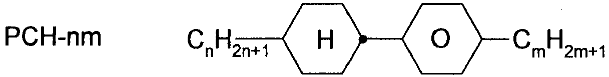

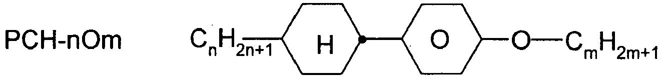

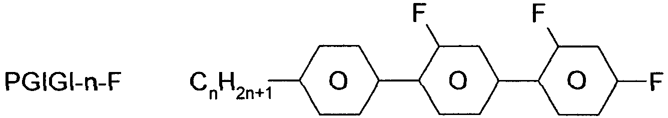

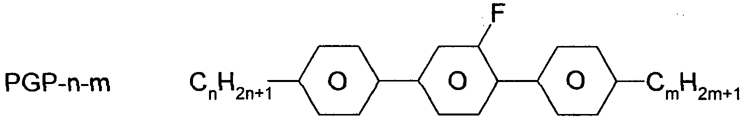

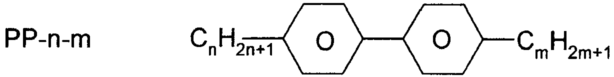

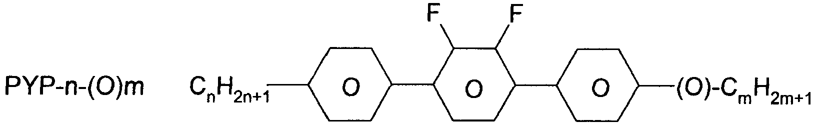

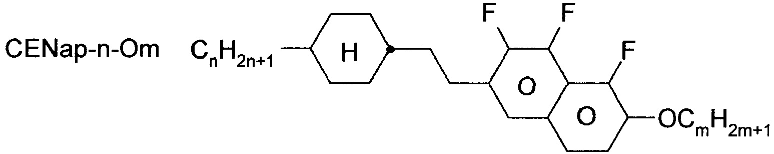

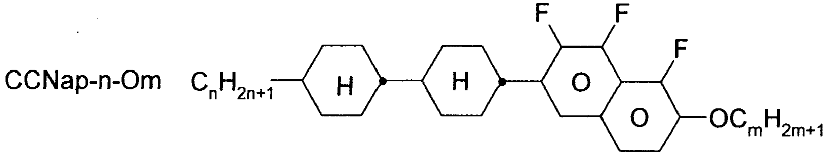

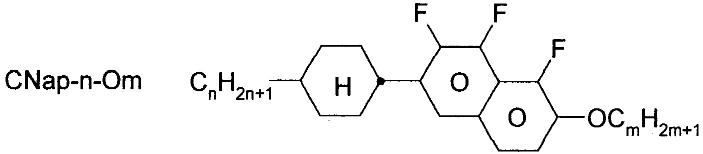

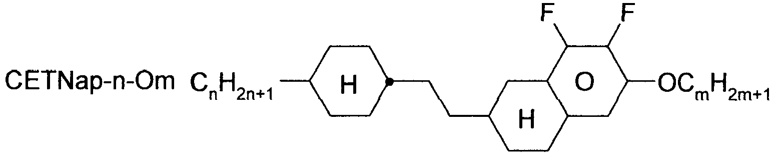

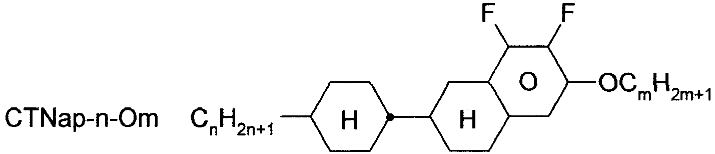

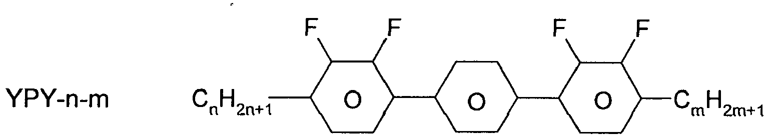

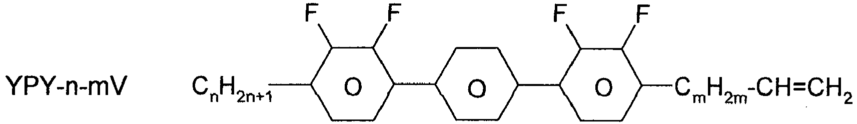

Die Herstellung der erfindungsgemäß verwendbaren Flüssigkristallmischungen erfolgt in an sich üblicher Weise. In der Regel wird die gewünschte Menge der in geringerer Menge verwendeten Komponenten in der den Hauptbestandteil ausmachenden Komponenten gelöst, zweckmäßig bei erhöhter Temperatur. Es ist auch möglich, Lösungen der Komponenten in einem organischen Lösungsmittel, z.B. in Aceton, Chloroform oder Methanol, zu mischen und das Lösungsmittel nach Durchmischung wieder zu entfernen, beispielsweise durch Destillation.
In der vorliegenden Anmeldung bedeuten die Begriffe dielektrisch positive Verbindungen solche Verbindungen mit einem Δε > 1,5, dielektrisch neutrale Verbindungen solche mit -1,5 ≤ Δε ≤ 1,5 und dielektrisch negative Verbindungen solche mit Δε < -1,5. Hierbei wird die dielektrische Anisotropie der Verbindungen bestimmt, indem 10 % der Verbindungen in einem flüssigkristallinen Host gelöst werden und von dieser Mischung die Kapazität in mindestens jeweils einer Testzelle mit 20 µm Schichtdicke mit homöotroper und mit homogener Oberflächenorientierung bei 1 kHz bestimmt wird. Die Messspannung beträgt typischerweise 0,5 V bis 1,0 V, jedoch stets weniger als die kapazitive Schwelle der jeweiligen Flüssigkristallmischung.

Als Hostmischung für dielektrisch positive und dielektrisch neutrale Verbindungen wird ZLI-4792 und für dielektrisch negative Verbindungen ZLI-2857, beide von Merck KGaA, Deutschland, verwendet. Aus der Änderung der Dielektrizitätskonstanten der Hostmischung nach Zugabe der zu untersuchenden Verbindung und Extrapolation auf 100 % der eingesetzten Verbindung werden die Werte für die jeweiligen zu untersuchenden Verbindungen erhalten.

Der Begriff Schwellenspannung bezieht sich üblicher Weise auf die optische Schwelle für 10 % relativen Kontrast (V₁₀), sofern nicht explizit anders angegeben.

In der vorliegenden Anmeldung wird jedoch in Bezug auf die Flüssigkristallmischungen mit negativer dielektrischer Anisotropie der Begriff Schwellenspannung für die kapazitive Schwellenspannung (V₀) auch Freedericksz-Schwelle genannt, verwendet, sofern nicht explizit anders angegeben.

Alle Konzentrationen in dieser Anmeldung, soweit nicht explizit anders vermerkt, sind in Massenprozent angegeben und beziehen sich auf die entsprechende Mischung oder Mischungskomponente. Alle physikalischen Eigenschaften werden nach "Merck Liquid Crystals, Physical Properties of Liquid Crystals", Status Nov. 1997, Merck KGaA, Deutschland bestimmt und gelten für eine Temperatur von 20 °C, sofern nicht explizit anders angegeben. Δn wird bei 589 nm und Δε bei 1 kHz bestimmt.

Bei den Flüssigkristallmedien mit negativer dielektrischer Anisotropie wird die Schwellenspannung als kapazitive Schwelle V₀ (auch Freedericksz-Schwelle genannt) in bei Merck KGaA, Deutschland, hergestellten Testzellen mit durch die Orientierungsschicht SE 1211 der Fa. Nissan Chemicals homöotrop orientiertem Flüssigkristall bestimmt.

Die Dielektrika können auch weitere, dem Fachmann bekannte und in der Literatur beschriebene Zusätze, wie z. B. UV-Absorber, Antioxidantien, Radikaifänger, enthalten. Beispielsweise können 0-15 % pleochroitische Farbstoffe zugesetzt werden, ferner Leitsalze, vorzugsweise Ethyldimethyldodecylammonium-4-hexoxybenzoat, Tetrabutylammonium-tetraphenylboranat oder Komplexsalze von Kronenethern (vgl. z.B. Haller et al., Mol. Cryst. Liq. Cryst. Band 24, Seiten 249- 258 (1973)) zur Verbesserung der Leitfähigkeit oder Substanzen zur Veränderung der dielektrischen Anisotropie, der Viskosität und/oder der Orientierung der nematischen Phasen. Derartige Substanzen sind z. B. in den DE-OS 22 09 127, 22 40 864, 23 21 632, 23 38 281, 24 50 088, 26 37 430 und 28 53 728 beschrieben.

Die erfindungsgemäßen Flüssigkristallmedien können bei Bedarf auch chirale Dotierstoffe in den üblichen Mengen enthalten. Die eingesetzte Menge dieser Dotierstoffe beträgt insgesamt 0 bis 10 % bezogen auf die Menge der gesamten Mischung, bevorzugt 0,1 bis 6 %. Die Konzentrationen der einzelnen eingesetzten Verbindungen beträgt bevorzugt 0,1 bis 3 %. Die Konzentration dieser und ähnlicher Zusatzstoffe wird bei der Angabe der Konzentrationen sowie der Konzentrationsbereiche der Flüssigkristallverbindungen in den Flüssigkristallmedien nicht berücksichtigt.

In der Tabelle A werden mögliche Dotierstoffe angegeben, die den erfindungsgemäßen Mischungen zugesetzt werden können.

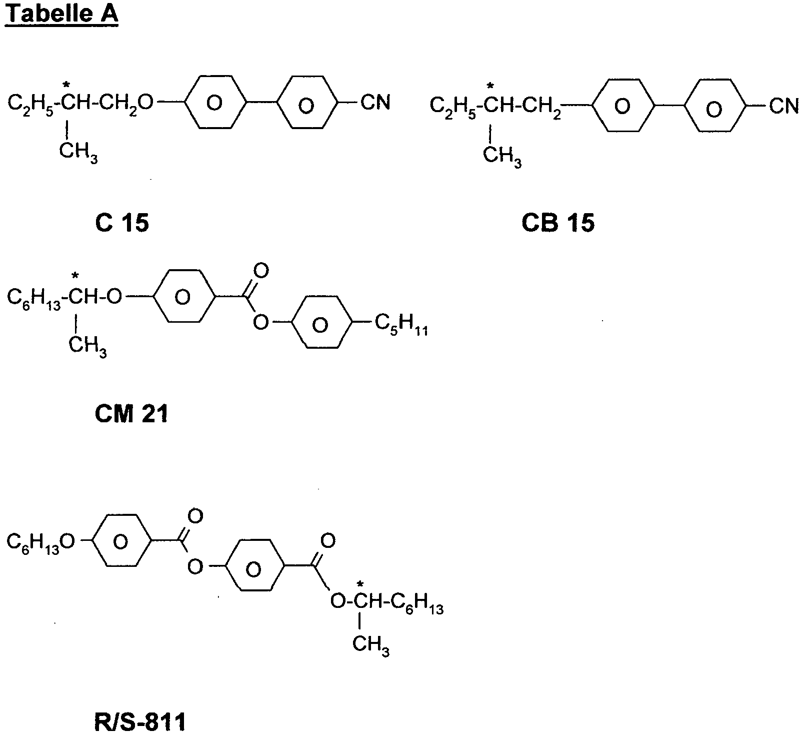

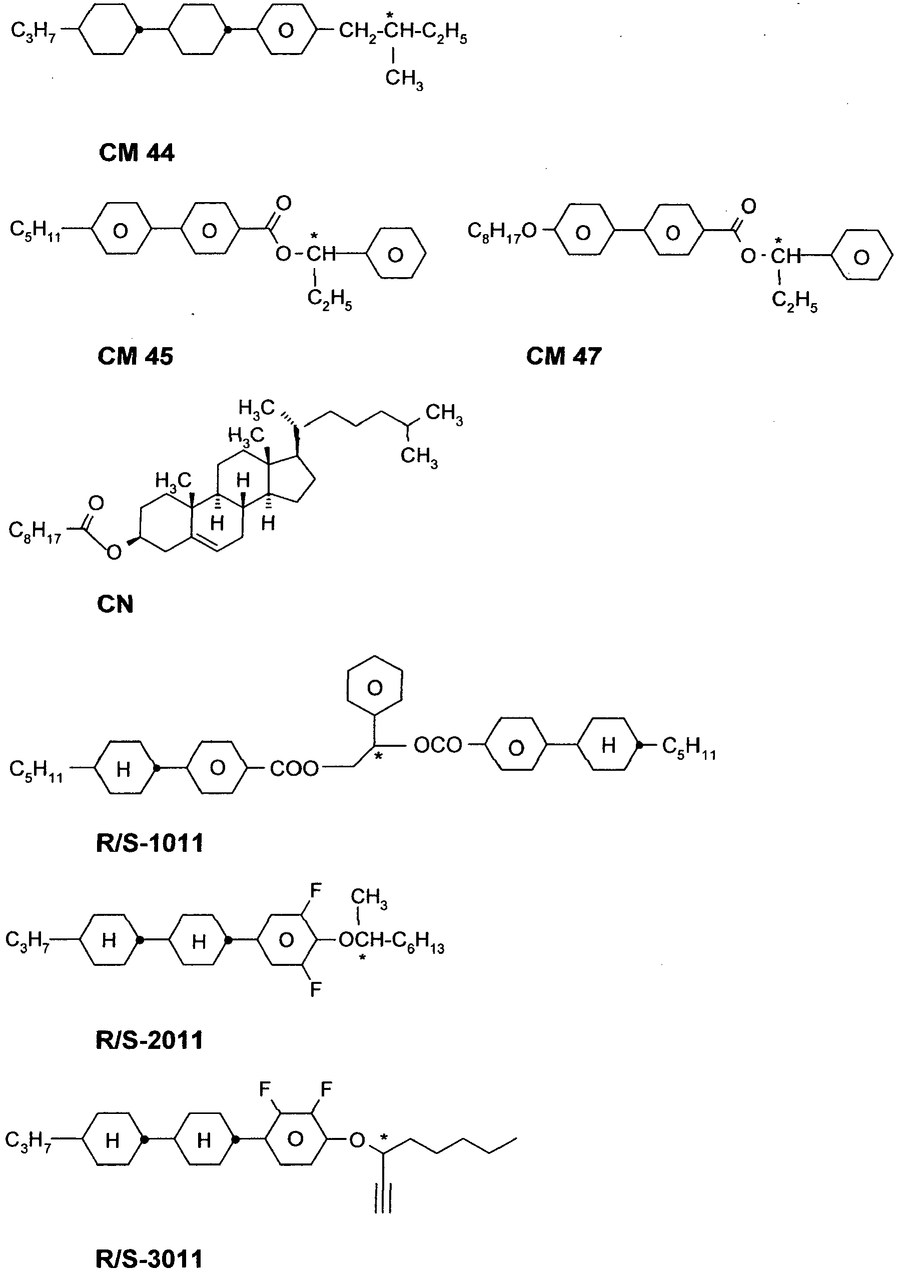

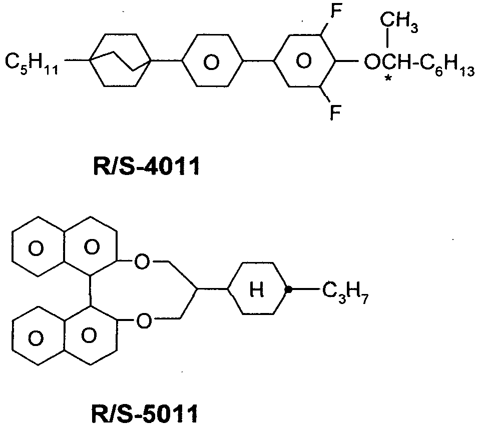

Stabilisatoren, die beispielsweise den erfindungsgemäßen Mischungen in Mengen von 0 - 10 % zugesetzt werden können, werden nachfolgend in Tabelle B genannt.

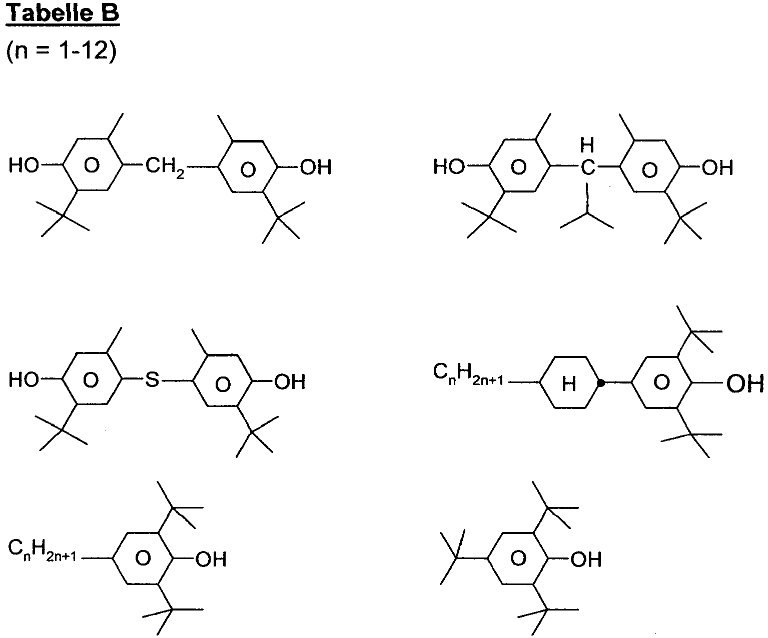

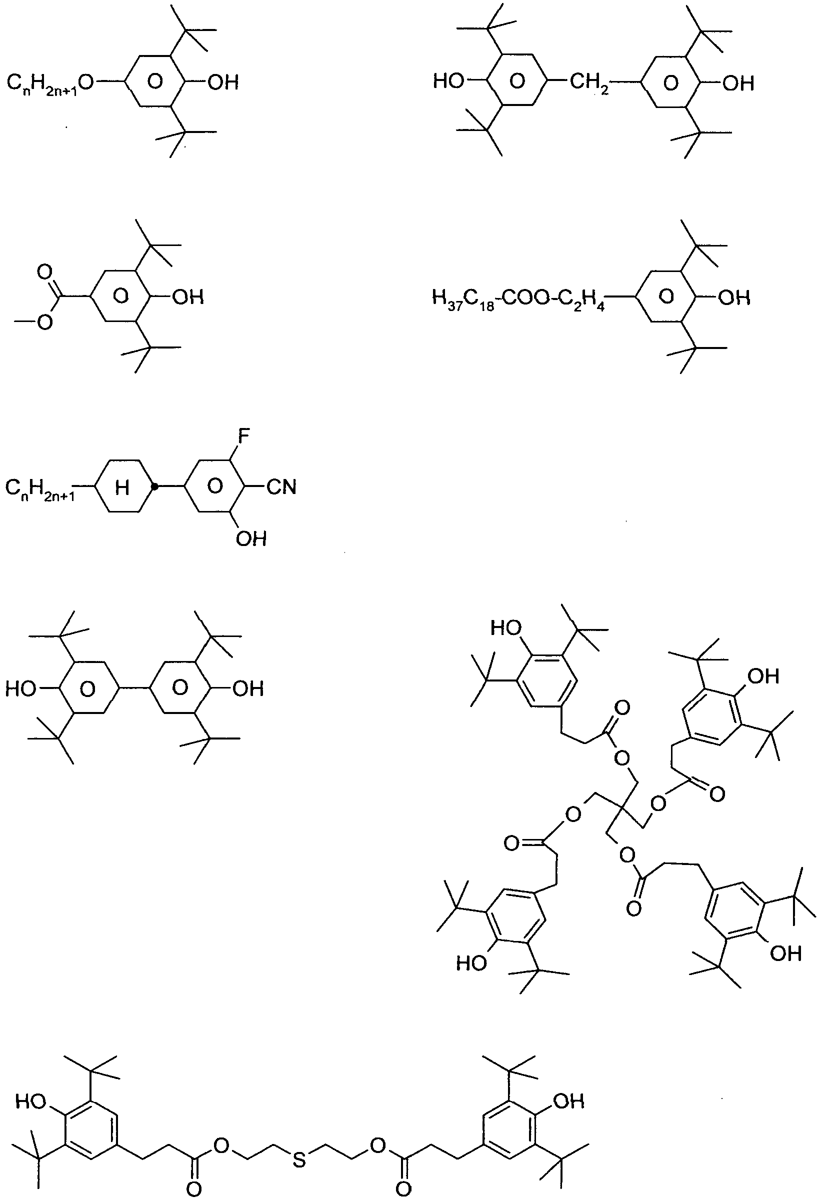

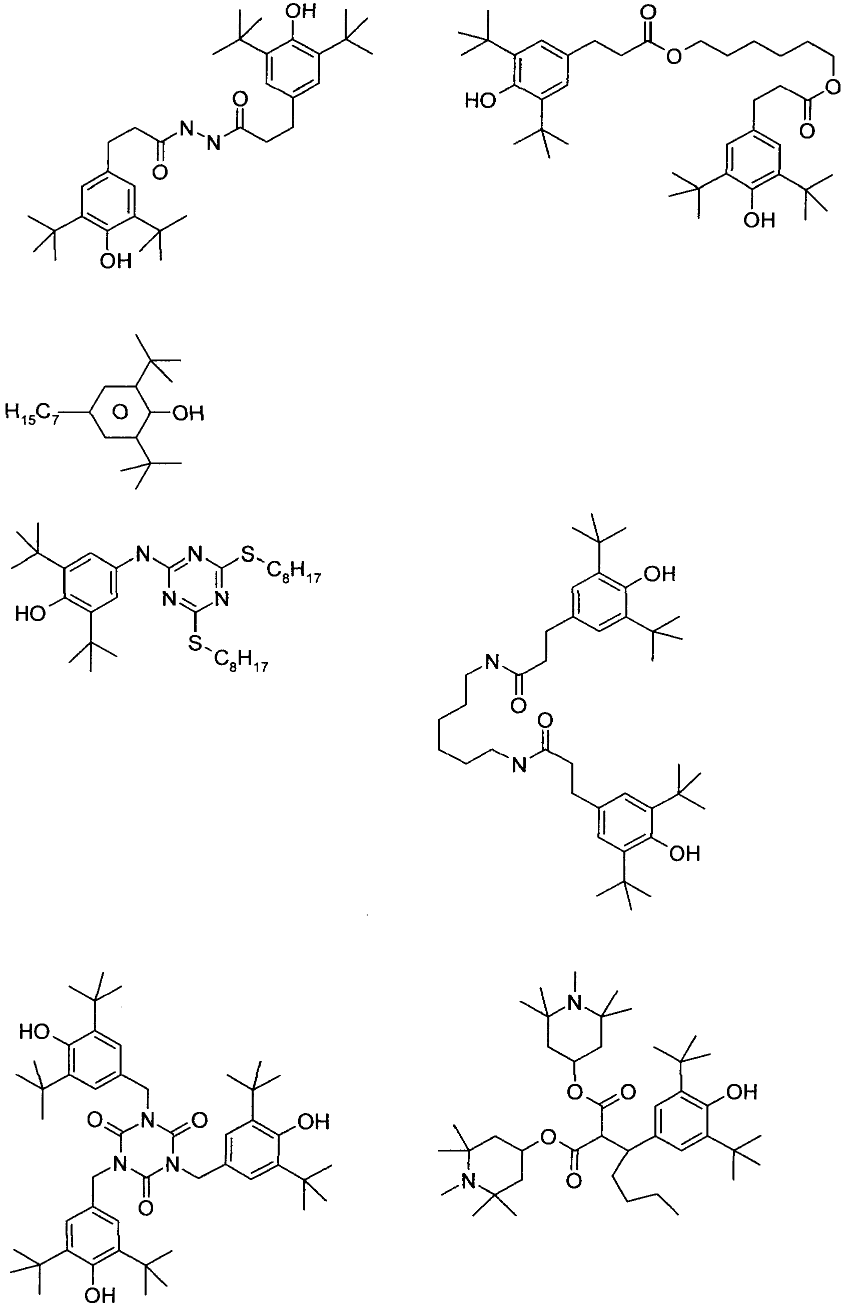

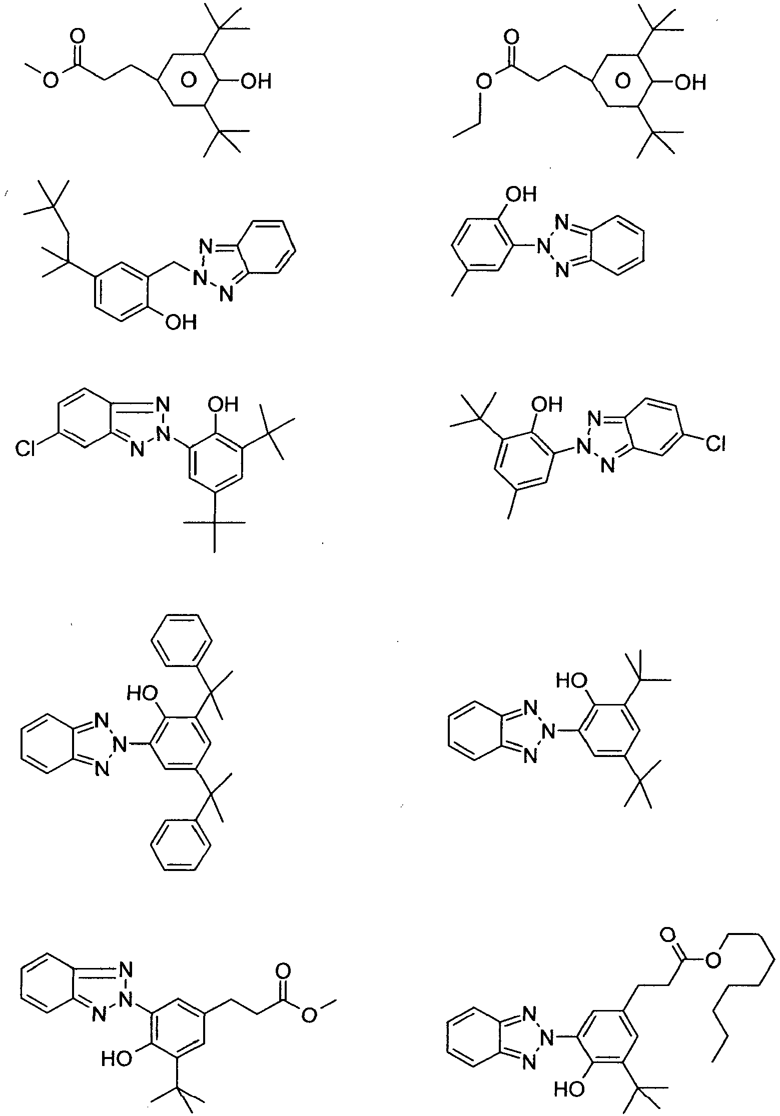

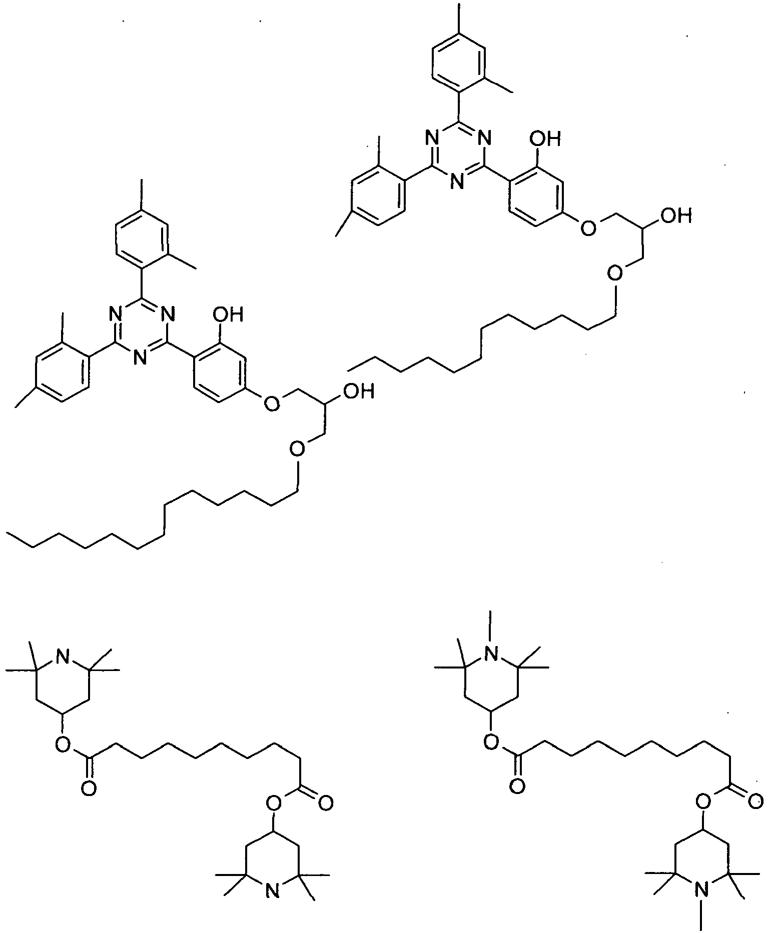

Die Zusammensetzungen bestehen aus mehreren Verbindungen, bevorzugt aus 3 bis 30, besonders bevorzugt aus 6 bis 20 und ganz besonders bevorzugt aus 10 bis 16 Verbindungen, die auf herkömmliche Weise gemischt werden. In der Regel wird die gewünschte Menge der in geringerer Menge verwendeten Komponenten in den den Hauptbestandteil ausmachenden Komponenten gelöst, zweckmäßigerweise bei erhöhter Temperatur. Liegt die gewählte Temperatur über dem Klärpunkt des Hauptbestandteils, so ist die Vervollständigung des Lösungsvorgangs besonders leicht zu beobachten. Es ist jedoch auch möglich, die Flüssigkristallmischungen auf anderen üblichen Wegen, z.B. unter Verwendung von Vormischungen oder aus einem sogenannten "Multi Bottle Sytem" herzustellen.

Mittels geeigneter Zusatzstoffe können die erfindungsgemäßen Flüssigkristallphasen derart modifiziert werden, dass sie in jeder bisher bekannt gewordenen Art von ECB-, VAN-, IPS-, GH- oder ASM-PA LCD-Anzeige einsetzbar sind.

Zur Messung der Voltage Holding Ratio werden Zellen mit einer Orientierungsschicht aus AI-3046 verwendet.

Die Anzeige zur Messung der Schwellenspannung weist zwei planparallele Trägerplatten im Abstand von 20 µm und Elektrodenschichten mit darüberliegenden Orientierungsschichten aus SE-1211 (Nissan Chemicals) auf den Innenseiten der Trägerplatten auf, welche eine homöotrope Orientierung der Flüssigkristalle bewirken.

## Patentansprüche

1. Flüssigkristallines Medium auf der Basis eines Gemisches von polaren Verbindungen mit negativer dielektrischer Anisotropie (Δε), **dadurch gekennzeichnet, dass** das Medium bei einem Klärpunkt von > 60 °C und einem Δε von ≤ -2,3 einen Wert für das Verhältnis γ₁ / Δn² [Pa·s] im Bereich von 6 - 45 Pa·s aufweist und mindestens eine Verbindung der Formeln O-1 bis O-11, 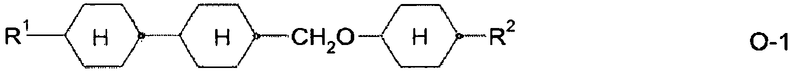 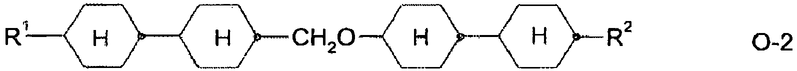 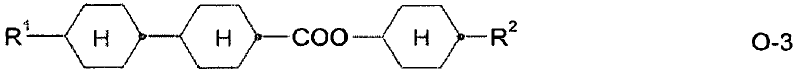 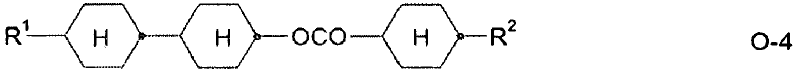 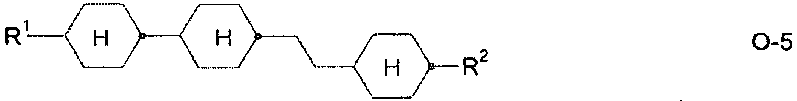 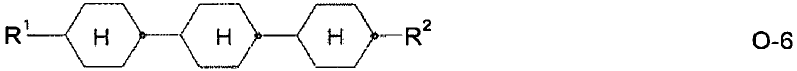 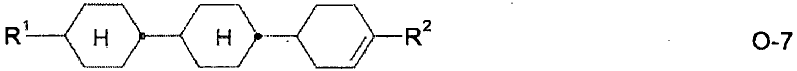 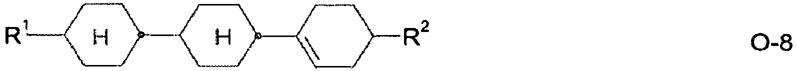 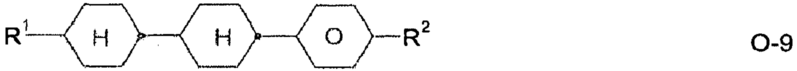 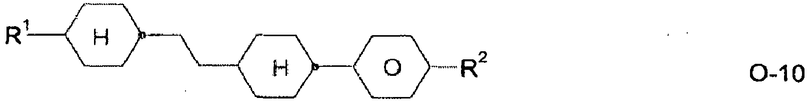 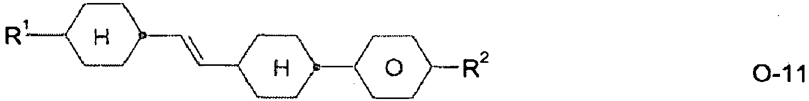 worin
R¹ und R² jeweils unabhängig voneinander einen geradkettigen Alkylrest mit bis zu 15 C-Atomen,
bedeuten und
mindestens zwei Verbindungen der Formeln IA, IB und/oder II, 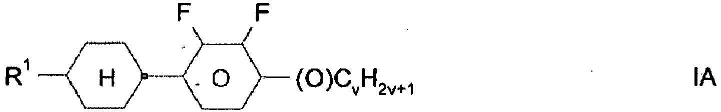 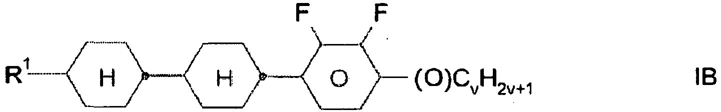 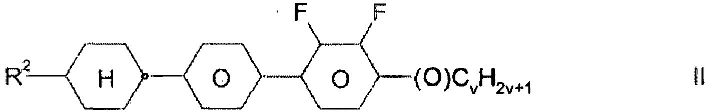
worin
R¹ und R² jeweils unabhängig voneinander einen unsubstituierten, einen einfach durch CN oder CF₃ oder einen mindestens einfach durch Halogen substituierten Alkenylrest mit bis zu 15 C-Atomen, wobei in diesen Resten auch eine oder mehrere CH₂-Gruppen jeweils unabhängig voneinander durch -O-, -S-, 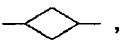 -C=C-, -CF₂O-, -CO-, -CO-O-, -O-CO- oder -O-CO-O- so ersetzt sein können, dass O-Atome nicht direkt miteinander verknüpft sind, und
v 1 bis 6
bedeutet,
worin der Anteil an Verbindungen der Formel IA und/oder IB im Gesamtgemisch mindestens 10 Gew.-% beträgt und/oder der Anteil an Verbindungen der Formeln II im Gesamtgemisch mindestens 10 Gew.-% beträgt,
enthält.

2. Flüssigkristallines Medium nach Anspruch 1, **dadurch gekennzeichnet, dass** das Medium einen Klärpunkt von 60 - 90 °C aufweist.

3. Flüssigkristallines Medium nach Anspruch 1 oder 2, **dadurch gekennzeichnet, dass** das Medium einen Δε-Wert von -2,3 bis -5,5 aufweist.

4. Flüsslgkristalllnes Medium nach einem der Ansprüche 1 bis 3, **dadurch gekennzeichnet, dass** das Medium mit einem Klärpunkt von 70 °C ± 5 °C und Δε von -3,0 ± 0,6 bei einem definierten Δn-Wert folgende Rotationsviskositäten γ₁ aufweist:
| Δn | γ₁ |
|---|---|
| 0,08 ± 0,005 | ≤ 125 mPa·s |
| 0,09 ± 0,005 | ≤ 130 mPa·s |
| 0,10 ± 0,005 | ≤ 135 mPa·s |
| 0,11 ± 0,005 | ≤ 145 mPa·s |
| 0,12 ± 0,005 | ≤ 150 mPa·s |
| 0,13 ± 0,005 | ≤ 160 mPa·s |
| 0,15 ± 0,01 | ≤ 170 mPa·s |

5. Flüssigkristallines Medium nach einem der Ansprüche 1 bis 3, **dadurch gekennzeichnet, dass** das Medium mit einem Klärpunkt von 70 °C ± 5 °C und Δε von -4,0 ± 0,4 bei einem definierten Δn-Wert folgende Rotationsviskositäten γ₁ aufweist:
| Δn | γ₁ |
|---|---|
| 0,08 ± 0,005 | ≤ 140 mPa·s |
| 0,09 ± 0,005 | ≤ 165 mPa·s |
| 0,10 ± 0,005 | ≤ 185 mPa·s |
| 0,11 ± 0,005 | ≤ 190 mPa·s |
| 0,12 ± 0,005 | ≤ 195 mPa·s |
| 0,13 ± 0,005 | ≤ 205 mPa·s |
| 0,15 ± 0,01 | ≤ 220 mPa·s |

6. Flüssigkristallines Medium nach einem der Ansprüche 1 bis 3, **dadurch gekennzeichnet, dass** das Medium mit einem Klärpunkt von 70 °C ± 5 °C und Δε von -5,0 ± 0,6 bei einem definierten An-Wert folgende Rotationsviskositäten γ₁ aufweist:
| Δn | γ₁ |
|---|---|
| 0,08 ± 0,005 | ≤ 185 mPa·s |
| 0,09 ± 0,005 | ≤ 200 mPa·s |
| 0,10 ± 0,005 | ≤ 210 mPa·s |
| 0,11 ± 0,005 | ≤ 220 mPa·s |
| 0,12 ± 0,005 | ≤ 230 mPa·s |
| 0,13 ± 0,005 | ≤ 250 mPa·s |
| 0,15 ± 0,01 | ≤ 270 mPa·s |

7. Flüssigkristallines Medium nach einem der Ansprüche 1 bis 3, **dadurch gekennzeichnet, dass** das Medium mit einem Klärpunkt von 90 °C ± 5 °C und Δε von -3,0 ± 0,6 bei einem definierten Δn-Wert folgende Rotationsviskositäten γ₁ aufweist:
| Δn | γ₁ |
|---|---|
| 0,08 ± 0,005 | ≤ 160 mPa·s |
| 0,09 ± 0,005 | ≤ 170 mPa·s |
| 0,10 ± 0,005 | ≤ 180 mPa·s |
| 0,11 ± 0,005 | ≤ 190 mPa·s |
| 0,12 ± 0,005 | ≤ 200 mPa·s |
| 0,13 ± 0,005 | ≤ 210 mPa·s |
| 0,15 ± 0,01 | ≤ 220 mPa·s |

8. Flüssigkristallines Medium nach einem der Ansprüche 1 bis 3, **dadurch gekennzeichnet, dass** das Medium mit einem Klärpunkt von 90 °C ± 5 °C und Δε von -4,0 ± 0,4 bei einem definierten Δn-Werte folgende Rotationsviskositäten γ₁ aufweist:
| Δn | γ₁ |
|---|---|
| 0,08 ± 0,005 | ≤ 185 mPa·s |
| 0,09 ± 0,005 | ≤ 195 mPa·s |
| 0,10 ± 0,005 | ≤ 215 mPa·s |
| 0,11 ± 0,005 | ≤ 215 mPa·s |
| 0,12 ± 0,005 | ≤ 215 mPa·s |
| 0,13 ± 0,005 | ≤ 235 mPa·s |
| 0,15 ± 0,01 | ≤ 250 mPa·s |

9. Flüssigkristallines Medium nach einem der Ansprüche 1 bis 3, **dadurch gekennzeichnet, dass** das Medium mit einem Klärpunkt von 90 °C. ± 5 °C und Δε von -5,0 ± 0,6 bei einem definierten Δn-Werte folgende Rotationsviskositäten γ₁ aufweist:
| Δn | γ₁ |
|---|---|
| 0,08 ± 0,005 | ≤ 280 mPa·s |
| 0,09 ± 0,005 | ≤ 275 mPa·s |
| 0,10 ± 0,005 | ≤ 275 mPa·s |
| 0,11 ± 0,005 | ≤ 275 mPa·s |
| 0,12 ± 0,005 | ≤ 280 mPa·s |

10. Flüssigkristallines Medium nach einem oder mehreren der Ansprüche 1 bis 9, **dadurch gekennzeichnet, dass** das Medium Schwellen (kapazitiv) im Bereich von 1,8 - 2,3 V aufweist.

11. Flüssigkristallines Medium nach einem oder mehreren der Ansprüche 1 bis 10, **dadurch gekennzeichnet, dass** es zusätzlich eine oder mehrere Verbindungen der Formel III, 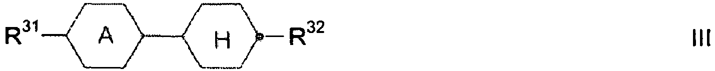 worin
R³¹ und R³² jeweils unabhängig voneinander einen geradkettigen Alkyl-, Alkylalkoxy- oder Alkoxyrest mit bis zu 12 C-Atomen, und 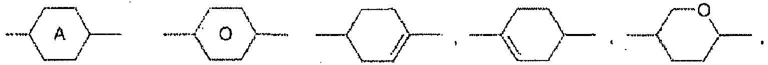 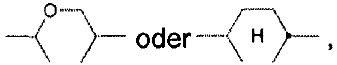
und
Z Einfachbindung, -C₂H₄-, -CH=CH-, -(CH₂)₄-, -(CH₂)₃O-, -O(CH₂)₃-, -CH=CHCH₂CH₂-, -CH₂CH₂CH=CH-, -CH₂O-, -OCH₂-, -CF₂O-, -OCF₂-, -COO-, -OCO-, -C₂F₄-, -CHFCF₂-, -CF=CF-, -CH=CF-, -CF=CH-, -CH₂-,
bedeuten,
enthält.

12. Flüssigkristallines Medium nach einem oder mehreren der Ansprüche 1 bis 11, **dadurch gekennzeichnet, dass** es zusätzlich eine Verbindung ausgewählt aus den Formeln IIIa bis IIIj enthält: 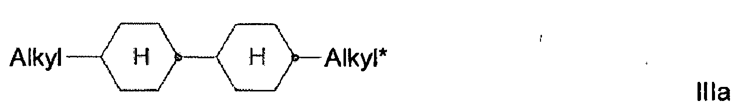 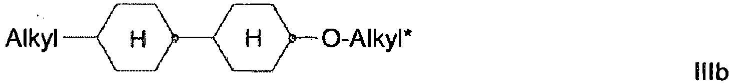 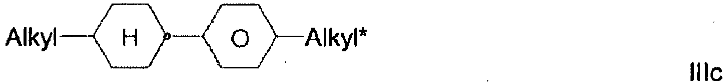 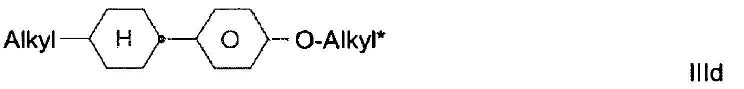 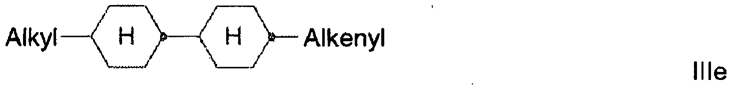 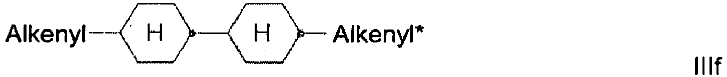 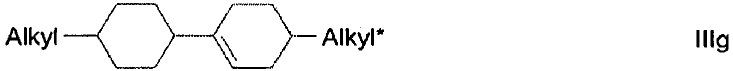 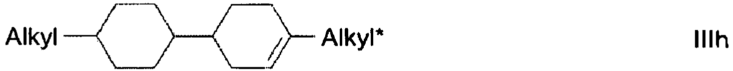 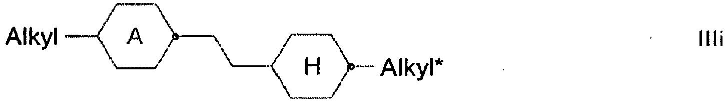 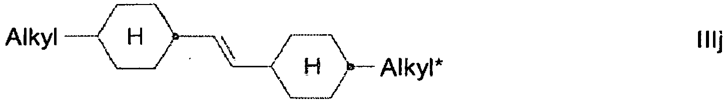 worin
Alkyl und Alkyl* jeweils unabhängig voneinander einen geradkettigen Alkylrest mit 1-6 C-Atomen, und Alkenyl und Alkenyl* jeweils unabhängig voneinander einen geradkettigen Alkenylrest mit 2-6 C-Atomen, vorzugsweise Vinyl, 1-E-Alkenyl oder 3-E-Alkenyl
bedeuten.

13. Flüssigkristallines Medium nach einem oder mehreren der Ansprüche 1 bis 12, **dadurch gekennzeichnet, dass** es zusätzlich ein oder mehrere fluorierte Terphenyle der Formeln T-1 bis T-22, 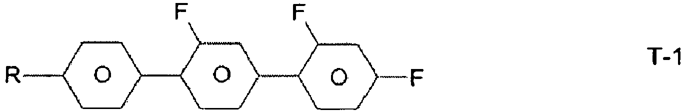 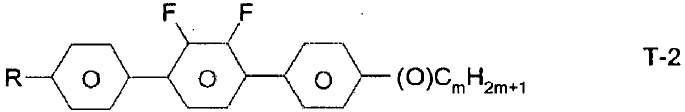 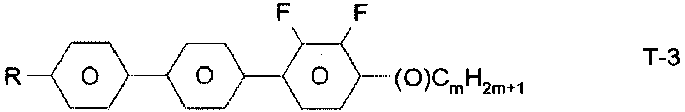 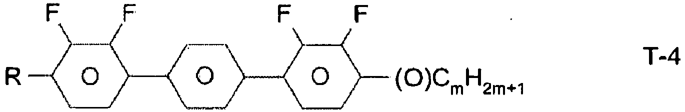 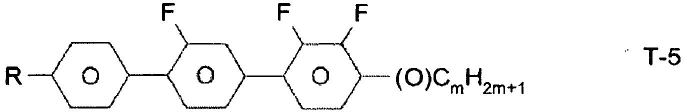 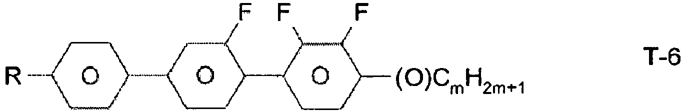 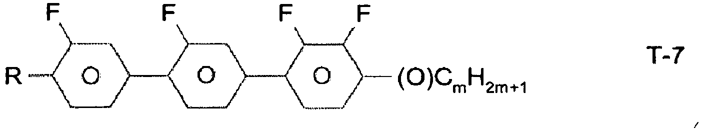 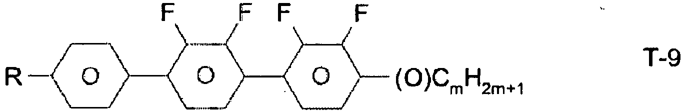 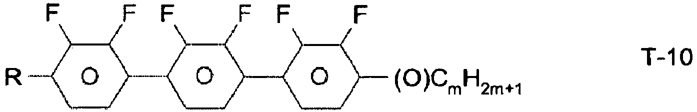 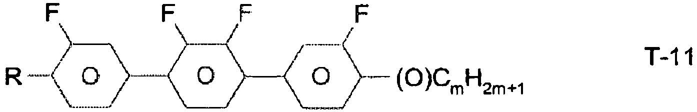 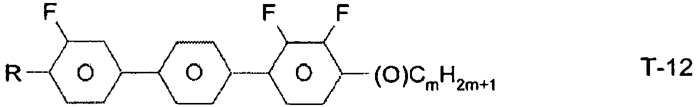 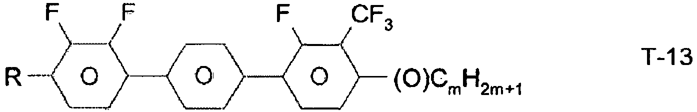 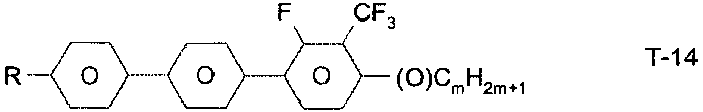 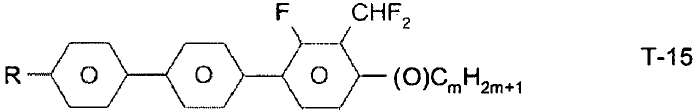 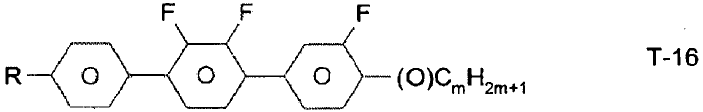 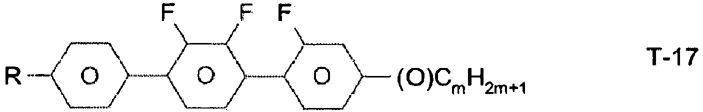 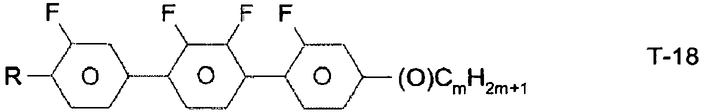 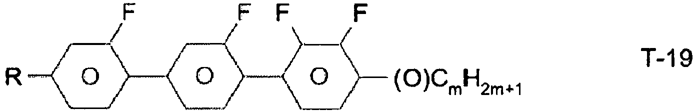 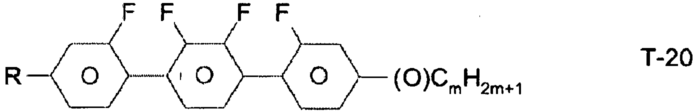 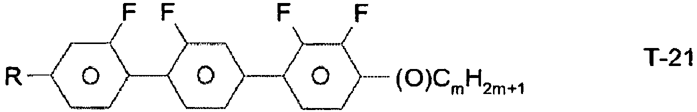 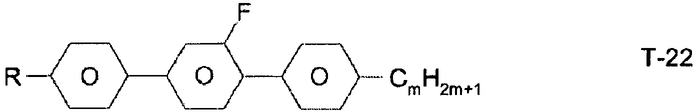 worin
R die für R¹ in Anspruch 1 angegebenen Bedeutungen hat.

14. Flüssigkristallines Medium nach einem oder mehreren der Ansprüche 1 bis 13, **dadurch gekennzeichnet, dass** das Medium die Verbindung der Formel 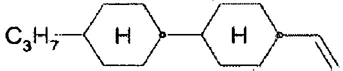 enthält.

15. Flüssigkristallines Medium nach einem oder mehreren der Ansprüche 1 bis 14, **dadurch gekennzeichnet, dass** es ein, zwei, drei, vier, fünf oder sechs Verbindungen der Formeln IA, IB und/oder II enthält.

16. Flüssigkristallines Medium nach einem oder mehreren der Ansprüche 1 bis 15, **dadurch gekennzeichnet, dass** der Anteil an Verbindungen der Formel III im Gesamtgemisch mindestens 5 Gew.-% beträgt.

17. Elektrooptische Anzeige mit einer Aktivmatrix-Addressierung basierend auf dem ECB-, PA LCD-, FFS- oder dem IPS-Effekt, **dadurch gekennzeichnet, dass** sie als Dielektrikum ein flüssigkristallines Medium nach einem oder mehreren der Ansprüche 1 bis 16 enthält.

## Claims

1. Liquid-crystalline medium based on a mixture of polar compounds having negative dielectric anisotropy (Δε), **characterized in that** the medium has a value for the ratio γ₁/Δn² [Pa·s] in the range 6-45 [Pa·s] with a clearing point of > 60°C and a Δε of ≤-2.3 and comprises at least one compound of the formulae O-1 to O-11, 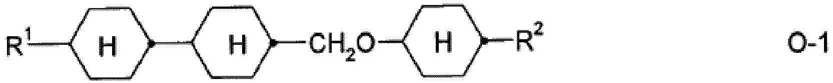 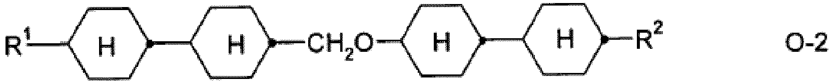 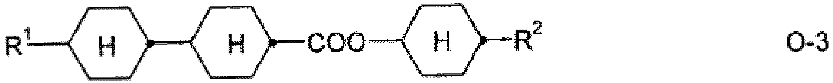 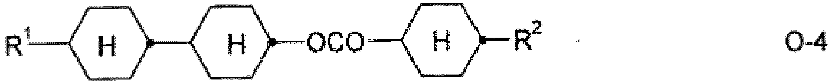 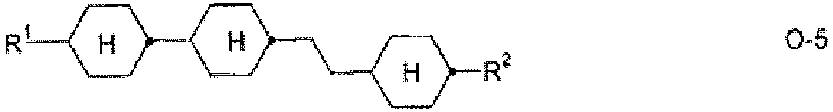 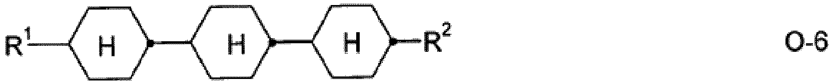 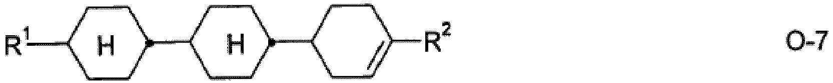 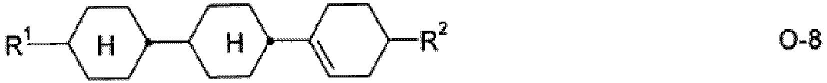 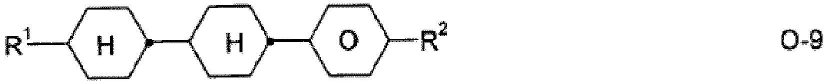 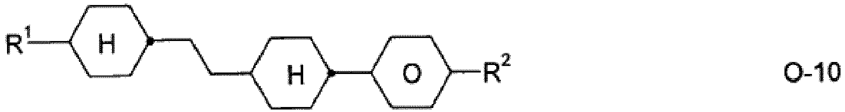 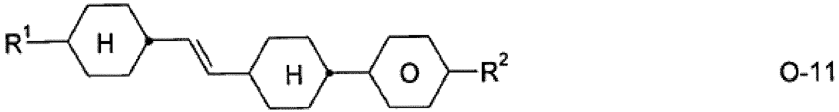 in which
R¹ and R² each, independently of one another, denote a straight-chain alkyl radical having up to 15 C atoms, and
at least two compounds of the formulae IA, IB and/or II, 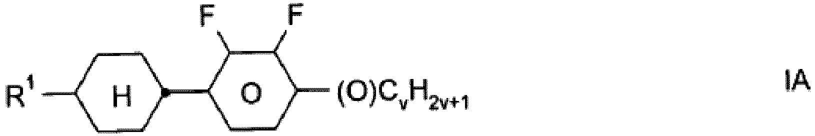 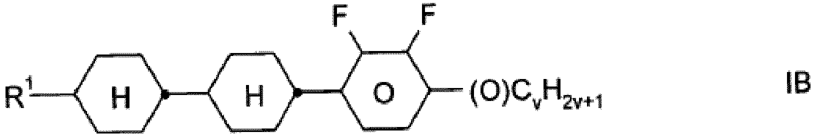 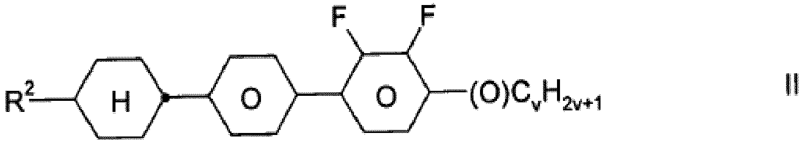 in which
R¹ and R² each, independently of one another, denote an alkenyl radical having up to 15 C atoms, which is unsubstituted, monosubstituted by CN or CF₃ or at least monosubstituted by halogen, where, in addition, one or more CH₂ groups in these radicals may each be replaced, independently of one another, by -O-, -S-, 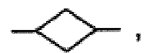 -C≡C-, -CF₂O-, -CO-, -CO-O-, -O-CO- or -O-CO-O- in such way that O atoms are not linked directly to one another, and
v denotes 1 to 6,
in which the proportion of compounds of the formulae IA and/or IB in the mixture as a whole is at least 10% by weight and/or the proportion of compounds of the formula II in the mixture as a whole is at least 10% by weight.

2. Liquid-crystalline medium according to claim 1, **characterized in that** the medium has a clearing point of 60-90°C.

3. Liquid-crystalline medium according to claim 1 or 2, **characterized in that** the medium has a Δε value of -2.3 to -5.5.

4. Liquid-crystalline medium according to one of claims 1 to 3, **characterized in that** the medium having a clearing point of 70°C ± 5° and a Δε of -3.0 ± 0.6 has the following rotational viscosities γ₁ at and a defined Δn value:
| Δn | γ₁ |
|---|---|
| 0.08 ± 0.005 | ≤ 125 mPa·s |
| 0.09 ± 0.005 | ≤ 130 mPa·s |
| 0.10 ± 0.005 | ≤ 135 mPa·s |
| 0.11 ± 0.005 | ≤ 145 mPa·s |
| 0.12 ± 0.005 | ≤ 150 mPa·s |
| 0.13 ± 0.005 | ≤ 160 mPa·s |
| 0.15 ± 0.01 | ≤ 170 mPa·s |

5. Liquid-crystalline medium according to one of claims 1 to 3, **characterized in that** the medium having a clearing point of 70°C ± 5°C and a Δε of -4.0 ± 0.4 has the following rotational viscosities γ₁ at and a defined Δn value:
| Δn | γ₁ |
|---|---|
| 0.08 ± 0.005 | ≤ 140 mPa·s |
| 0.09 ± 0.005 | ≤ 165 mPa·s |
| 0.10 ± 0.005 | ≤ 185 mPa·s |
| 0.11 ± 0.005 | ≤ 190 mPa·s |
| 0.12 ± 0.005 | ≤ 195 mPa·s |
| 0.13 ± 0.005 | ≤ 205 mPa·s |
| 0.15 ± 0.01 | ≤ 220 mPa·s |

6. Liquid-crystalline medium according to one of claims 1 to 3, **characterized in that** the medium having a clearing point of 70°C ± 5°C and a Δε of -5.0 ± 0.6 has the following rotational viscosities γ₁ at and a defined Δn value:
| Δn | γ₁ |
|---|---|
| 0.08 ± 0.005 | ≤ 185 mPa·s |
| 0.09 ± 0.005 | ≤ 200 mPa·s |
| 0.10 ± 0.005 | ≤ 210 mPa·s |
| 0.11 ± 0.005 | ≤ 220 mPa·s |
| 0.12 ± 0.005 | ≤ 230 mPa·s |
| 0.13 ± 0.005 | ≤ 250 mPa·s |
| 0.15 ± 0.01 | ≤ 270 mPa·s |

7. Liquid-crystalline medium according to one of claims 1 to 3, **characterized in that** the medium having a clearing point of 90°C ± 5°C and a Δε of -3.0 ± 0.6 has the following rotational viscosities γ₁ at and a defined Δn value:
| Δn | γ1 |
|---|---|
| 0.08 ± 0.005 | ≤ 160 mPa·s |
| 0.09 ± 0.005 | ≤ 170 mPa·s |
| 0.10 ± 0.005 | ≤ 180 mPa·s |
| 0.11 ± 0.005 | ≤ 190 mPa·s |
| 0.12 ± 0.005 | ≤ 200 mPa·s |
| 0.13 ± 0.005 | ≤ 210 mPa.s |
| 0.15 ± 0.01 | ≤ 220 mPa·s |

8. Liquid-crystalline medium according to one of claims 1 to 3, **characterized in that** the medium having a clearing point of 90°C ± 5°C and a Δε of -4.0 ± 0.4 has the following rotational viscosities γ₁ at and a defined Δn value:
| Δn | Yi |
|---|---|
| 0.08 ± 0.005 | ≤ 185 mPa.s |
| 0.09 ± 0.005 | ≤ 195 mPa·s |
| 0.10 ± 0.005 | ≤ 215 mPa·s |
| 0.11 ± 0.005 | ≤ 215 mPa·s |
| 0.12 ± 0.005 | ≤ 215 mPa·s |
| 0.13 ± 0.005 | ≤ 235 mPa·s |
| 0.15 ± 0.01 | ≤ 250 mPa·s |

9. Liquid-crystalline medium according to one of claims 1 to 3, **characterized in that** the medium having a clearing point of 90°C ± 5°C and a Δε of -5.0 ± 0.6 has the following rotational viscosities γ₁ at and a defined Δn value:
| Δn | γ₁ |
|---|---|
| 0.08 ± 0.005 | ≤ 280 mPa·s |
| 0.09 ± 0.005 | ≤ 275 mPa·s |
| 0.10 ± 0.005 | ≤ 275 mPa·s |
| 0.11 ± 0.005 | ≤ 275 mPa·s |
| 0.12 ± 0.005 | ≤ 280 mPa·s |

10. Liquid-crystalline medium according to one or more of claims 1 to 9, **characterized in that** the medium has thresholds (capacitive) in the range 1.8- 2.3 V.

11. Liquid-crystalline medium according to one or more of claims 1 to 10, **characterized in that** it additionally comprises one or more compounds of the formula III, 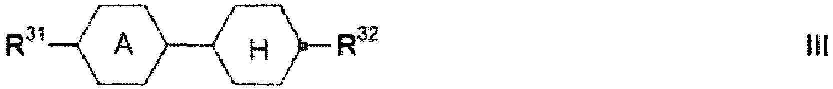 in which
R³¹ and R³² each, independently of one another, denote a straight-chain alkyl, alkylalkoxy or alkoxy radical having up to 12 C atoms, and 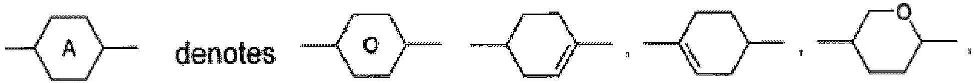 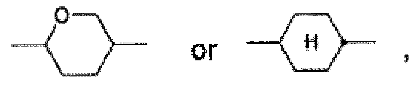 and
Z denotes a single bond, -C₂H₄-, -CH=CH-, -(CH₂)₄-, -(CH₂)₃O-, -O(CH₂)₃-, -CH=CHCH₂CH₂-, -CH₂CH₂CH=CH-, -CH₂O-, -OCH₂-, -CF₂O-, -OCF₂-, -COO-, -OCO-, -C₂F₄-, -CHFCF₂-, -CF=CF-, -CH=CF-, -CF=CH-, -CH₂-.

12. Liquid-crystalline medium according to one or more of claims 1 to 11, **characterized in that** it additionally comprises a compound selected from the formulae IIIa to IIIj: 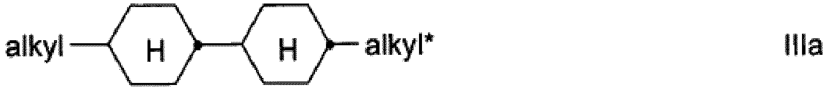 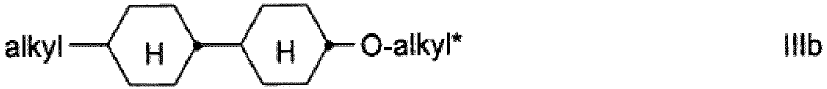 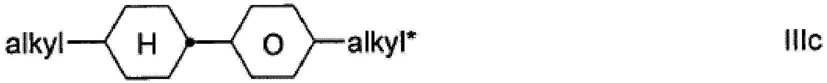 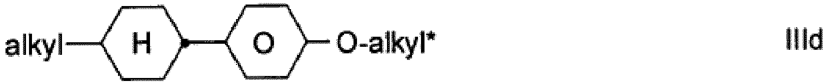 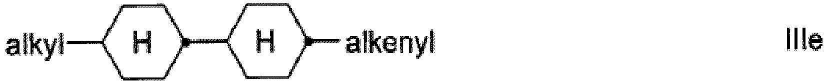 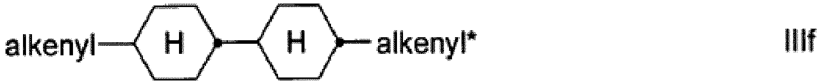 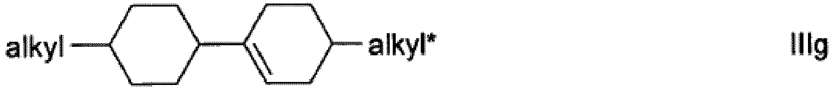 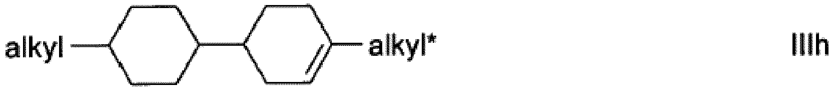 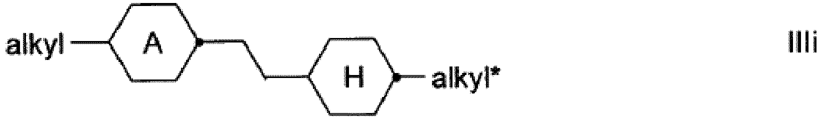 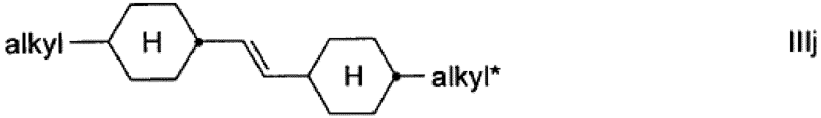 in which
alkyl and alkyl* each, independently of one another, denote a straight-chain alkyl radical having 1-6 C atoms, and
alkenyl and alkenyl* each, independently of one another, denote a straight-chain alkenyl radical having 2-6 C atoms, preferably vinyl, 1-E-alkenyl or 3-E-alkenyl.

13. Liquid-crystalline medium according to one or more of claims 1 to 12, **characterized in that** it additionally comprises one or more fluorinated terphenyls of the formulae T-1 to T-22, 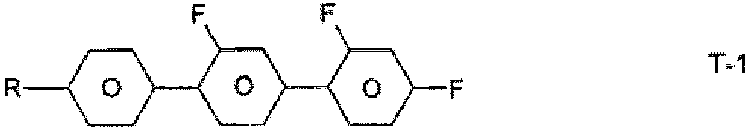 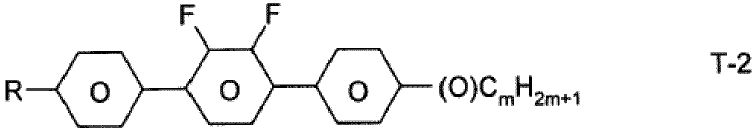 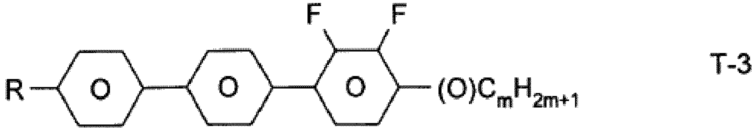 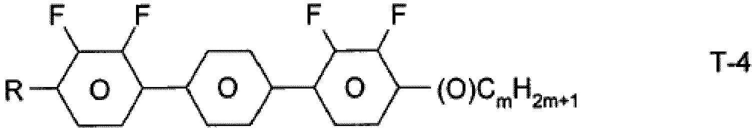 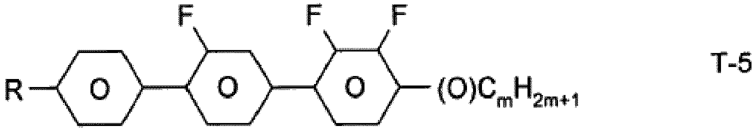 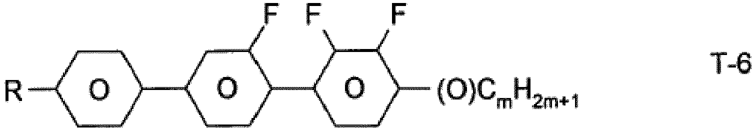 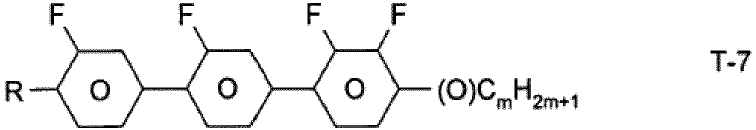 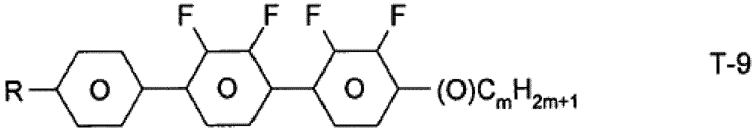 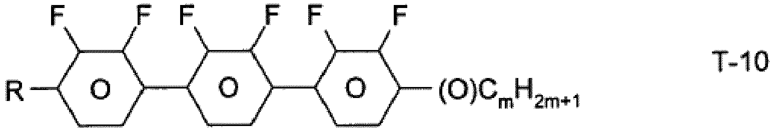 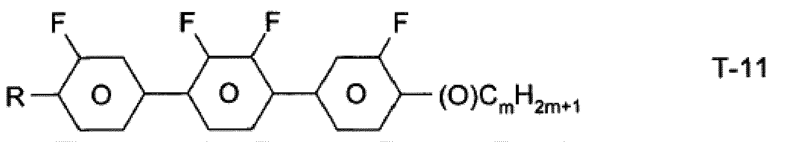 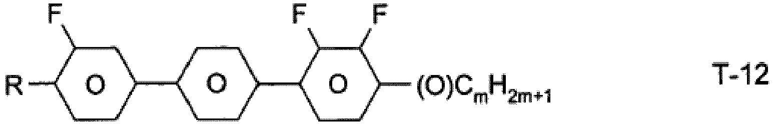 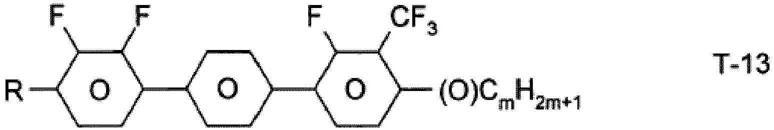 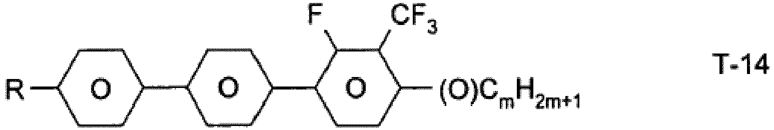 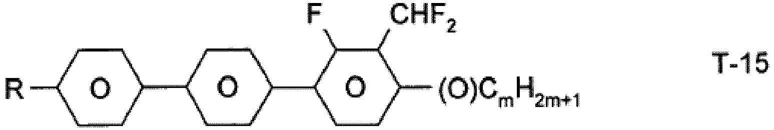 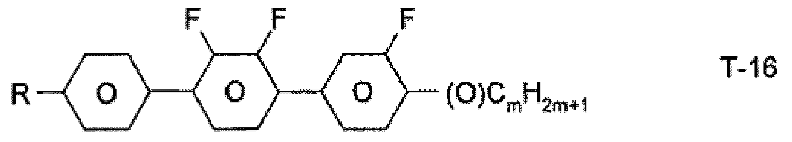 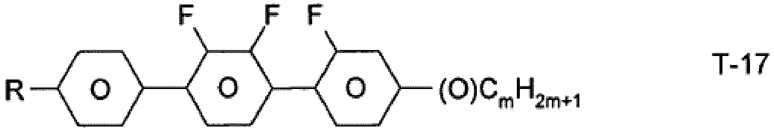 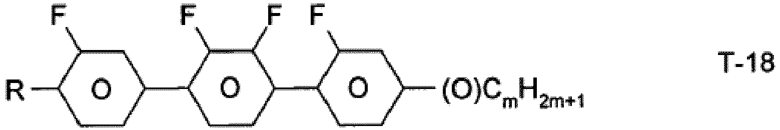 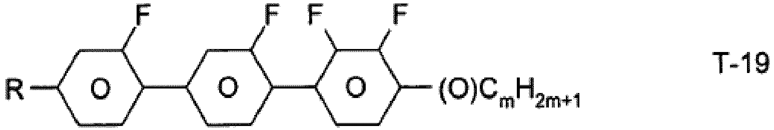 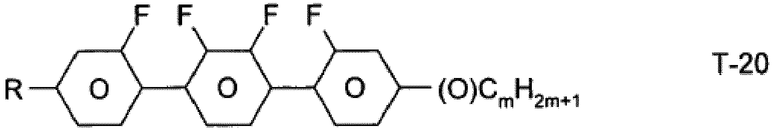 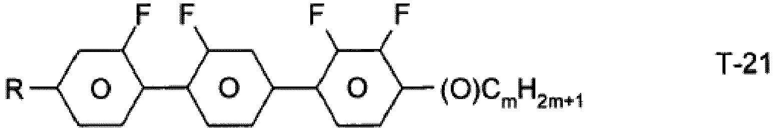 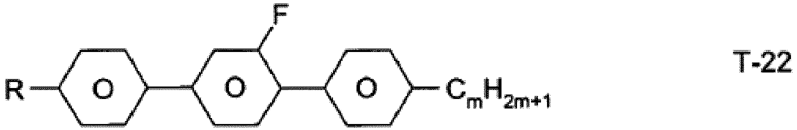 in which
R has the meanings indicated for R¹ in claim 1.

14. Liquid-crystalline medium according to one or more of claims 1 to 13, **characterized in that** the medium comprises the compound of the formula

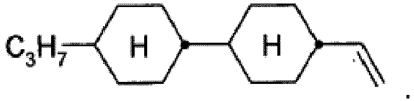

15. Liquid-crystalline medium according to one or more of claims 1 to 14, **characterized in that** it comprises one, two, three, four, five or six compounds of the formulae IA, IB and/or II.

16. Liquid-crystalline medium according to one or more of claims 1 to 15, **characterized in that** the proportion of compounds of the formula III in the mixture as a whole is at least 5% by weight.

17. Electro-optical display having an active-matrix addressing based on the ECB, PA LCD, FFS or IPS effect, **characterized in that** it contains, as dielectric, a liquid-crystalline medium according to one or more of claims 1 to 16.

## Revendications

1. Milieu cristallin liquide basé sur un mélange de composés polaires ayant une anisotropie diélectrique négative (Δε), **caractérisé en ce que** le milieu a une valeur pour le rapport γ₁/Δn² [Pa·s] dans la plage 6-45 [Pa·s] avec un point de clarification de > 60°C et un Δε de < -2,3 et comprend au moins un composé des formules O-1 à O-11, 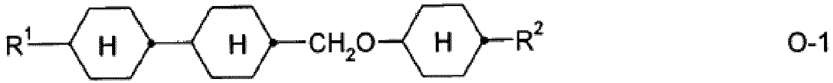 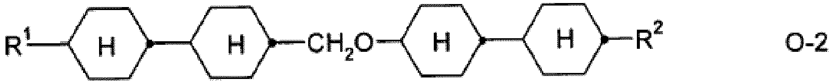 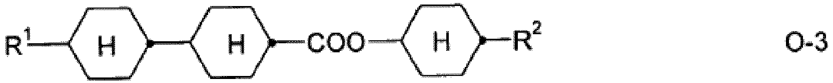 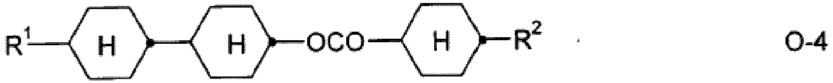 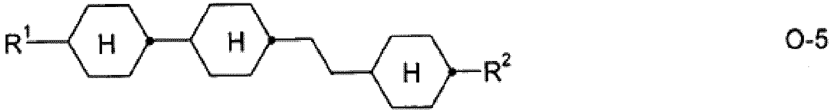 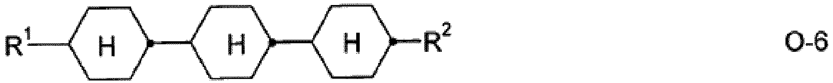 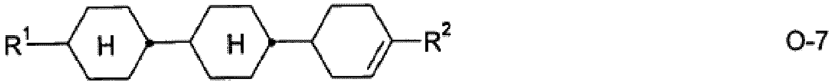 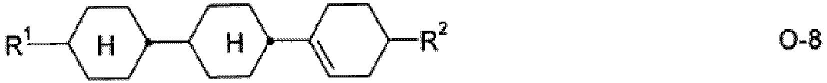 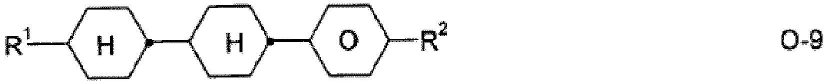 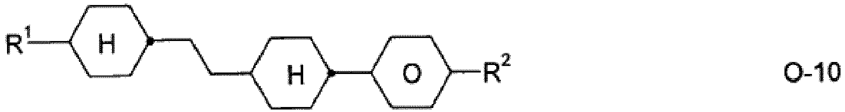 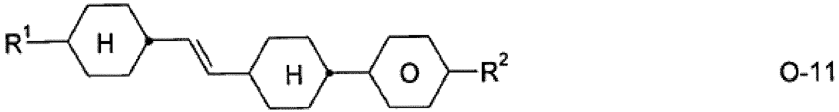 dans lesquelles
R1 et R2 chacun, indépendamment l'un de l'autre, représentent un radical alkyle en chaîne droite comportant jusqu'à 15 atomes de C,
au moins deux composes des formules IA, IB et/ou II, 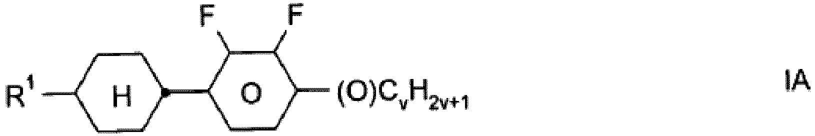 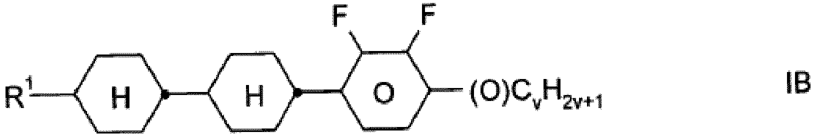 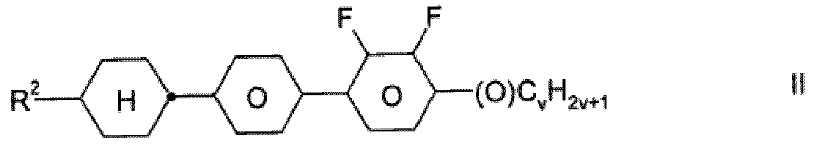
dans lesquelles
R1 et R2 chacun, indépendamment l'un de l'autre, représentent un radical alkényle ayant jusqu'à 15 atomes de C qui est non substitué, monosubstitué par CN ou CF3 ou au moins monosubstitué par halogène, où, en addition, un ou plusieurs groupes CH₂ dans ces radicaux peuvent chacun, indépendamment l'un de l'autre, être remplacés par -O-, -S-, 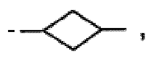 -C=C-, -CF₂O-, -CO-, -CO-O-, -O-CO- ou -O-CO-O- de telle sorte que des atomes de O ne soient pas liés directement l'un à l'autre, et
v représente 1 à 6,
**caractérisé en ce que** la proportion de composés des formules IA et/ou IB dans le mélange dans sa totalité est d'au moins 10% en poids et la proportion de composés de la formule II dans le mélange dans sa totalité est d'au moins 10% en poids.

2. Milieu cristallin liquide selon la revendication 1, **caractérisé en ce que** le milieu a un point de clarification de 60 - 90°C.

3. Milieu cristallin liquide selon la revendication 1 ou 2, **caractérisé en ce que** le milieu a une valeur Δε de -2,3 to -5,5.

4. Milieu cristallin liquide selon une des revendications 1 à 3, **caractérisé en ce que** le milieu ayant un point de clarification de 70°C ± 5°C et un Δε de -3,0 ± 0,6 a les viscosités en rotation γ₁ pour une valeur Δn définie comme suit:
| Δn | γ1 |
|---|---|
| 0.08 ± 0.005 | ≤ 125 mPa·s |
| 0.09 ± 0.005 | ≤ 130 mPa·s |
| 0.10 ± 0.005 | ≤ 135 mPa·s |
| 0.11 ± 0.005 | ≤ 145 mPa·s |
| 0.12 ± 0.005 | ≤ 150 mPa·s |
| 0.13 ± 0.005 | ≤ 160 mPa·s |
| 0.15 ± 0.01 | ≤ 170 mPa·s |

5. Milieu cristallin liquide selon une des revendications 1 à 3, **caractérisé en ce que** le milieu ayant un point de clarification de 70°C ± 5°C et un Δε de -4,0 ± 0,4 a les viscosités en rotation γ₁ pour une valeur Δn definie comme suit:
| Δn | γ1 |
|---|---|
| 0.08 ± 0.005 | ≤ 140 mPa·s |
| 0.09 ± 0.005 | ≤ 165 mPa·s |
| 0.10 ± 0.005 | ≤ 185 mPa·s |
| 0.11 ± 0.005 | ≤ 190 mPa·s |
| 0.12 ± 0.005 | ≤ 195 mPa·s |
| 0.13 ± 0.005 | ≤ 205 mPa·s |
| 0.15 ± 0.01 | ≤ 220 mPa·s |

6. Milieu cristallin liquide selon une des revendications 1 à 3, **caractérisé en ce que** le milieu ayant un point de clarification de 70°C ± 5°C et un Δε de -5,0 ± 0,6 a les viscosités en rotation γ₁ pour une valeur Δn definie comme suit:
| Δn | γ₁ |
|---|---|
| 0.08 ± 0.005 | ≤ 185 mPa·s |
| 0.09 ± 0.005 | ≤ 200 mPa·s |
| 0.10 ± 0.005 | ≤ 210 mPa·s |
| 0.11 ± 0.005 | ≤ 220 mPa·s |
| 0.12 ± 0.005 | ≤ 230 mPa·s |
| 0.13 ± 0.005 | ≤ 250 mPa·s |
| 0.15 ± 0,01 | ≤ 270 mPa·s |

7. Milieu cristallin liquide selon une des revendications 1 à 3, **caractérisé en ce que** le milieu ayant un point de clarification de 90°C ± 5°C et un Δε de -3,0 ± 0,6 a les viscosités en rotation γ₁ pour une valeur Δn definie comme suit:
| Δn | γ₁ |
|---|---|
| 0.08 ± 0.005 | ≤ 160 mPa·s |
| 0.09 ± 0.005 | ≤ 170 mPa·s |
| 0.10 ± 0.005 | ≤ 180 mPa·s |
| 0.11 ± 0.005 | ≤ 190 mPa·s |
| 0.12 ± 0.005 | ≤ 200 mPa·s |
| 0.13 ± 0.005 | ≤ 210 mPa·s |
| 0.15 ± 0.01 | ≤ 220 mPa·s |

8. Milieu cristallin liquide selon une des revendications 1 à 3, **caractérisé en ce que** le milieu ayant un point de clarification de 90°C ± 5°C et un Δε de -4,0 ± 0,4 a les viscosités en rotation γ₁ pour une valeur Δn definie comme suit:
| Δn | γ1 |
|---|---|
| 0.08 ± 0.005 | ≤ 185 mPa·s |
| 0.09 ± 0.005 | ≤ 195 mPa·s |
| 0.10 ± 0.005 | ≤ 215 mPa·s |
| 0.11 ± 0.005 | ≤ 215 mPa·s |
| 0.12 ± 0.005 | ≤ 215 mPa·s |
| 0.13 ± 0.005 | ≤ 235 mPa·s |
| 0.15 ± 0.01 | ≤ 250 mPa·s |

9. Milieu cristallin liquide selon une des revendications 1 à 3, **caractérisé en ce que** le milieu ayant un point de clarification de 90°C ± 5°C et un Δε de -5,0 ± 0,6 a les viscosités en rotation γ₁ pour une valeur Δn definie comme suit:
| Δn | γ₁ |
|---|---|
| 0.08 ± 0.005 | ≤ 280 mPa·s |
| 0.09 ± 0.005 | ≤ 275 mPa·s |
| 0.10 ± 0.005 | ≤ 275 mPa·s |
| 0.11 ± 0.005 | ≤ 275 mPa·s |
| 0.12 ± 0.005 | ≤ 280 mPa·s |

10. Milieu cristallin liquide selon une ou plusieurs des revendications 1 à 9, **caractérisé en ce que** le milieu a des seuils (capacitifs) dans la plage 1,8-2,3 V.

11. Milieu cristallin liquide selon une ou plusieurs des revendications 1 à 10, **caractérisé en ce qu'**il comprend additionnellement un ou plusieurs composés de la formule III, 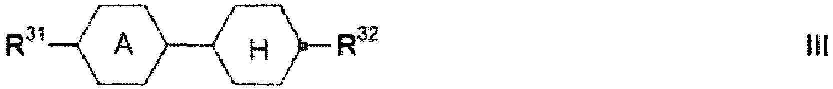 dans laquelle
R³¹ et R³² chacun, indépendamment l'un de l'autre, représentent un radical alkyle, alkylalcoxy ou alcoxy en chaîne droite ayant jusqu'à 12 atomes de C, et 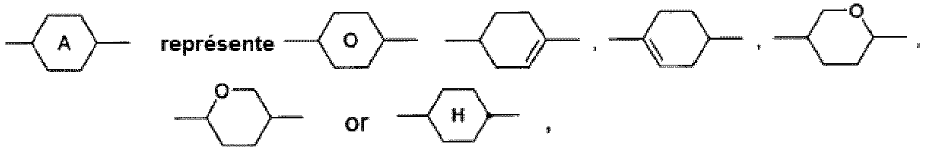 et
Z représente une liaison simple, -C₂H₄-, -CH=CH-, -(CH₂)₄-. -(CH₂)₃O-, -O(CH₂)₃-, -CH=CHCH₂CH₂-, -CH₂CH₂CH=CH-, -CH₂O-, -OCH₂-, -CF₂O-, -OCF₂-, -COO-, -OCO-, -C₂F₄-, -CHFCF₂-, -CF=CF-, -CH=CF-, -CF=CH-, -CH₂-.

12. Milieu cristallin liquide selon une ou plusieurs des revendications 1 à 11, **caractérisé en ce qu'**il comprend additionnellement un composé choisi parmi les formules IIIa à IIIj: 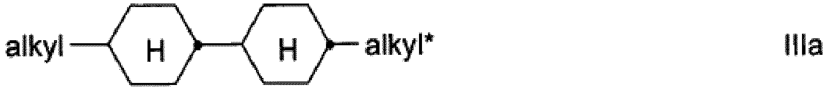 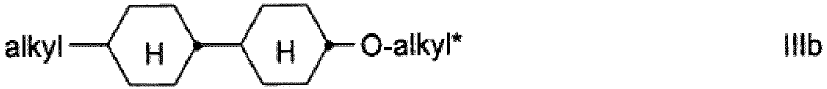 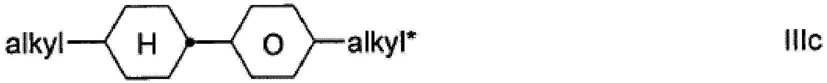 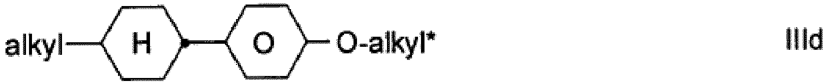 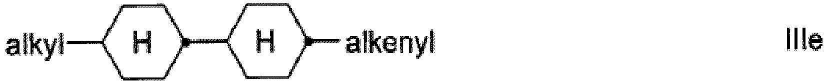 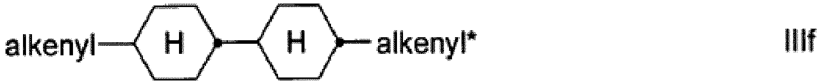 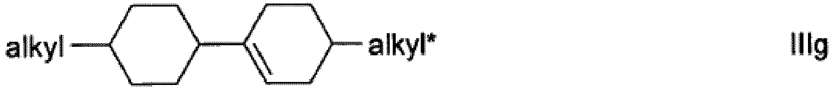 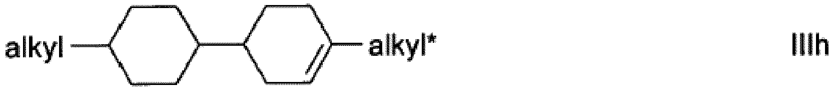 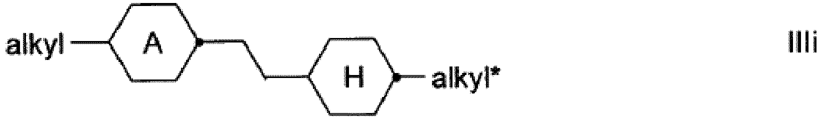 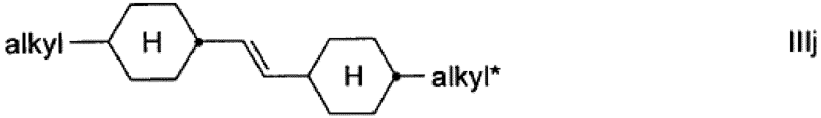 dans lesquelles
alkyl et alkyl* chacun, indépendamment l'un de l'autre, représentent un radical alkyle en chaîne droite comportant 1-6 atomes de C, et
alkenyl et alkenyl* chacun, indépendamment l'un de l'autre, représentent un radical alkényle en chaîne droite comportant 2-6 atomes de C, de préférence vinyle, 1 E-alkényle ou 3E-alkényle.

13. Milieu cristallin liquide selon une ou plusieurs des revendications 1 à 12, **caractérisé en ce qu'**il comprend additionnellement un ou plusieurs terphényls fluorés des formules T-1 à T-22, 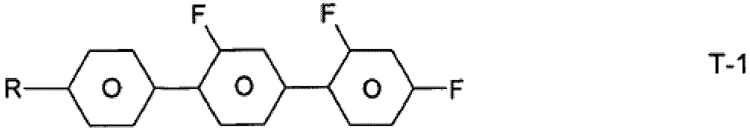 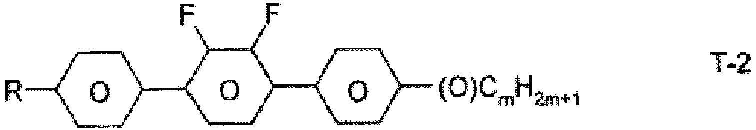 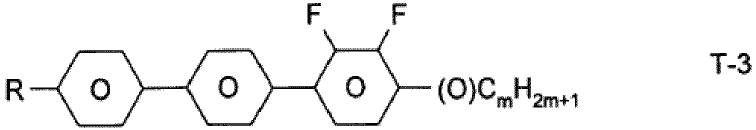 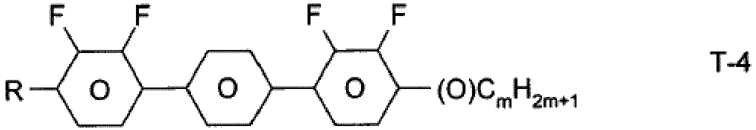 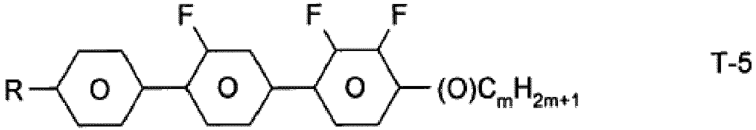 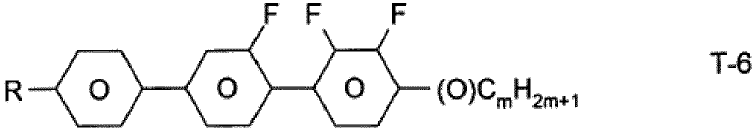 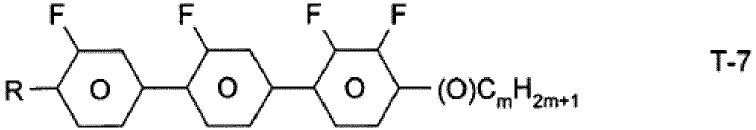 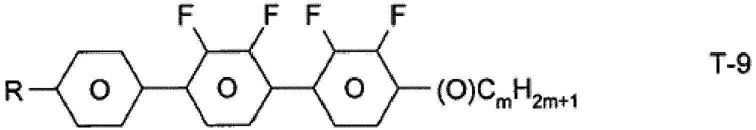 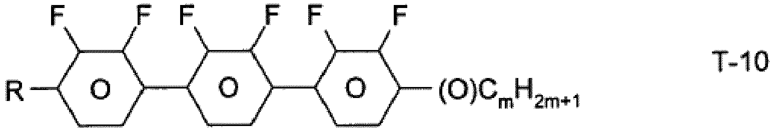 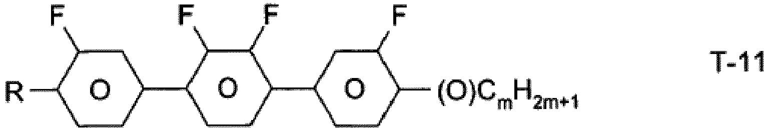 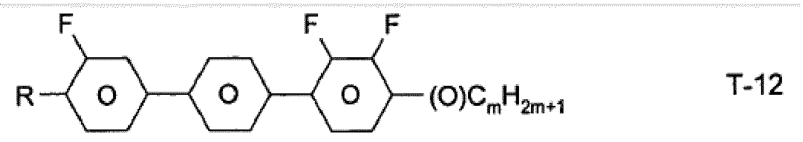 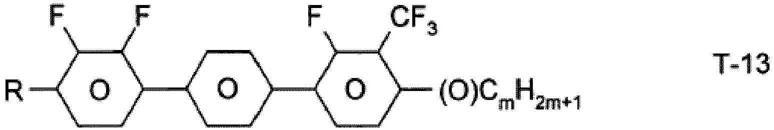 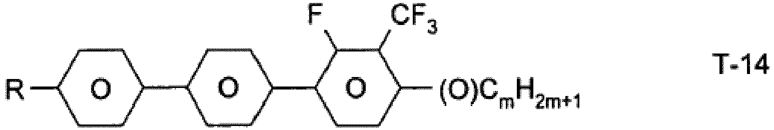 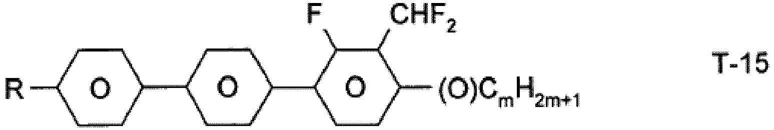 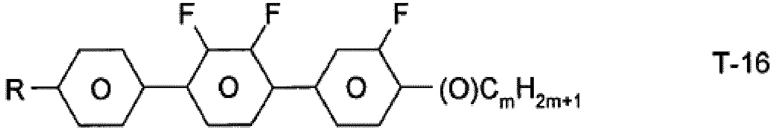 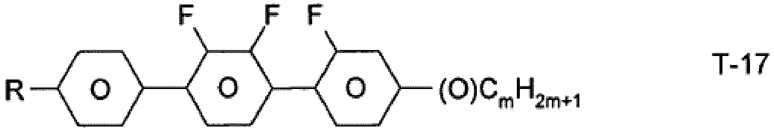 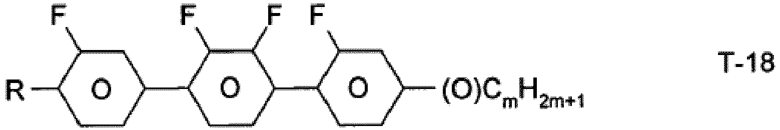 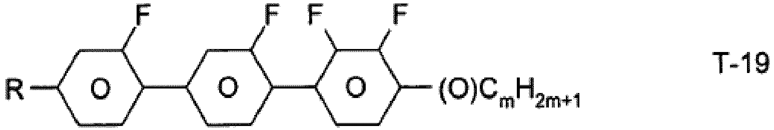 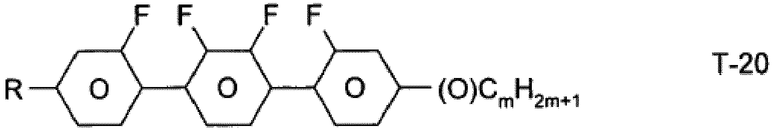 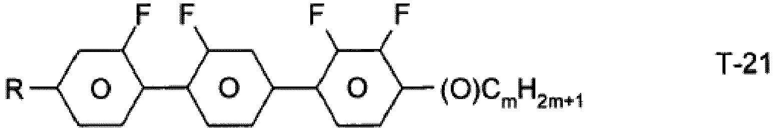 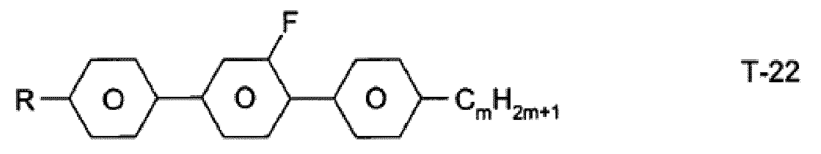 dans lesquelles
R représente les significations indiquees pour R¹ selon la revendication 1.

14. Milieu cristallin liquide selon une ou plusieurs des revendications 1 à 13, **caractérisé en ce que** le milieu comprend le composé de la formule

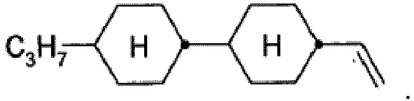

15. Milieu cristallin liquide selon une ou plusieurs des revendications 1 à 14 **caractérisé en ce qu'**il comprend un, deux, trois, quatre, cinq ou six composés des formules IA, IB et/ou II.

16. Milieu cristallin liquide selon une ou plusieurs des revendications 1 à 15 **caractérisé en ce que** la proportion de composés de la formule II dans le mélange dans sa totalité est d'au moins 5% en poids.

17. Affichage electro-optique ayant un adressage par matrice active basé sur l'effet ECB, PA LCD, FFS ou IPS, **caractérisé en ce qu'**il contient, comme diélectrique, un milieu cristallin liquide selon une ou plusieurs des revendications 1 à 16.
